# EUROPEAN PATENT APPLICATION

(11) **EP 4 852 407 A1**
(43) Date of publication of application: **09.12.2026**
(21) Application number: 26181534.4
(22) Date of filing: 28.05.2026
(51) Int. Cl.: H04L 65/65, H04L 65/61, H04L 65/70, H04L 65/75, H04L 65/80, H04L 65/612, H04L 67/131, H04L 69/00, H04L 69/24, H04N 21/854, H04L 69/28

(54) **IMMERSIVE MEDIA TRANSPORT PROTOCOL**

(30) Priority: 06.06.2025 US 202563819523 P; 14.04.2026 US 202619647089
(71) Applicant: Apple Inc., Cupertino, CA 95014 (US)
(72) Inventor: OSSIA, Kevin S., Cupertino, California, 95014 (US); YAEGER, Matthew J., Cupertino, California, 95014 (US)
(74) Representative: Zacco Denmark A/S

(57) **Abstract**

Techniques for transmitting immersive media are described. A sending device creates a frame definition object with media type identifiers for each media frame, and sends the corresponding frame definition packets to a receiving device. The sending device transmits media packets that contain data of different media types for the media frame defined by the frame definition object. A receiver device receives the frame definition object in the form of the frame definition packets. The receiver device allocates media buffers for the media frame based on the frame definition, and places media packets for the frame into the plurality of media buffers in accordance with the allocation. The receiver device reconstructs the frame once all media packets for the frame are received.

## Description

### Field of the Invention

This disclosure relates generally to media streaming and more specifically to providing a protocol for transmitting immersive media frames for spatial computing.

### Background

Media consumption is a frequent use of electronic devices. Users can use many types of electronic devices to access and stream live immersive media content for playback. Many of these electronic devices support high-definition media playback, such as Ultra HD or 4K, on a compatible display.

In current times, it can be preferable to view media in a more immersive manner. As an example, a user may wish to stream an immersive media item on a head-mounted device (HMD). Spatial computing encompasses various technologies that enable users to interact with digital content in three-dimensional space, such as augmented reality (AR), virtual reality (VR), and mixed reality (MR). Spatial computing devices, such as HMDs, can provide immersive and realistic experiences for users by rendering and displaying digital content, which may or may not be interactive content.

### Brief Description of the Drawings

FIG. 1 depicts a network diagram of an example system for transmitting media streams using an immersive media transport protocol, in accordance with one or more embodiments.
FIG. 2 illustrates an example overview for transmitting and presenting media content using the disclosed protocol, in accordance with one or more embodiments.
FIG. 3 depicts a flow diagram of an example process for transmitting and receiving media frames using an immersive media transport protocol, in accordance with one or more embodiments.
FIG. 4 depicts a flow diagram of an example process for handling missing packets using an immersive media transport protocol, in accordance with one or more embodiments.
FIG. 5 is a flow diagram of an example process for multithreaded transmission using an immersive media transport protocol, in accordance with one or more embodiments.
FIG. 6 is a flow diagram of an example process for retransmission management using an immersive media transport protocol, in accordance with one or more embodiments.
FIGs. 7A-7C illustrate an example flow diagram for using an immersive media transport protocol to propagate media instructions through a network, in accordance with one or more embodiments.
FIG. 8 illustrates an example overview for using the disclosed protocol for file transfer, in accordance with one or more embodiments.
FIG. 9 depicts a flow diagram of an example handshake process for an immersive media transport protocol, in accordance with one or more embodiments.
FIG. 10 depicts a flow diagram of a technique for file transmission using the immersive media transport protocol, in accordance with one or more embodiments.
FIG. 11 depicts a flow diagram of an example process for handling missing packets during file transfer, in accordance with one or more embodiments.
FIG. 12 is a block diagram of an example electronic device in which various aspects of the disclosure may be performed.

### Detailed Description

The present disclosure describes a network protocol for transmitting media streams comprising multiple media types. In particular, the present disclosure describes a technique for transferring multiple types of immersive media, such as images, audio, and metadata, in a single frame.

According to one or more embodiments, a protocol is described, referred to as Immersive Media Transport Protocol (IMTP). The protocol allows for transmission of multiple media types within a single frame by using a frame definition object. A sending device generates the frame definition object for media to be transmitted for a particular frame. The frame definition object includes a frame identifier and multiple media type identifiers indicating the type of media incorporated in the frame. The frame definition object is then transmitted as a series of frame packets to a receiving device, from which a receiving device can plan for incoming media packets for media identified in the frame object. The sending device can then send the media packets for the frame as a set of media packets to the receiving device.

In some embodiments, transmitting the media packets includes generating a header that includes a packet type and sequence identifier. Transmitted packets can be stored in a sent buffer for retrieval in case any particular packet is lost or not received by the receiving device. Further, the packet type and sequence identifier enables a packetization mechanism that divides a frame into smaller network packets of different media types, and allows packets to be received out of order and be reconstructed on the receiving device.

Based on a received frame definition object, a receiving device can allocate one or more media buffers for the media frame, for example corresponding to different media types, based on the expected sizes of the media, or the like. The receiving device can then place the received media packets into the allocated buffers and track missing packets based on sequence numbers provided in the packet headers. Once all expected packets are received, the receiving device can then reconstruct the frame.

According to one or more embodiments, the IMTP protocol may be associated with a predefined protocol structure that can be used for non-frame-based data, as well. For example, the IMTP protocol can be used for file transfer by adjusting some behaviors. For example, latency constraints may be relaxed, and rather than frames, data may be transmitted in chunks. In lieu of a frame definition object, a file definition object may be used to include relevant file information. Further, other frame-specific operations may be disabled, such as frame-level reordering, packet expiration, or the like. Accordingly, IMTP provides the flexibility to use the same protocol and associated structure for different types of files.

According to some embodiments, the IMTP protocol supports multithreaded transmission, where media packets are distributed over multiple sender threads. In particular, rather than use a single thread to transmit packets sequentially, multiple threads can be used to efficiently transmit frame data. Further, the threads can be spawned dynamically, for example based on network conditions. Packets are then multiplexed across the threads to increase throughput and improve efficient use of available bandwidth.

In one or more embodiments, the IMTP protocol supports dynamic resizing of frame reorder buffers during transmission. For example, the buffers on the receiver device may be dynamically resized based on round trip time, interframe interval, or the like. The target buffer size may be calculated in real time, and may also take into consideration packet loss rates and throughput.

Embodiments described herein address the technical challenges that arise from transmission of multiple types of media items for a frame. In particular, embodiments herein address the technical problems that arise from transmission of live media, such as packet loss, out-of-order delivery, latency, and bandwidth utilization when network conditions and upcoming media packets are evolving during a stream.

Embodiments described herein provide a technical solution by introducing a network protocol that uses a frame definition object to convey information about multiple types of media to be transmitted for a frame. The protocol includes a packetization mechanism that allows packets to arrive out of order and be reconstructed correctly at the receiving device. Additionally, the techniques described herein feature a dynamically resized frame reorder buffer based on round trip time and interframe interval, ensuring smooth video and audio streaming even over long distances. The multithreaded send and receive capabilities further enhance throughput by multiplexing packets across multiple threads and can be expanded by spawning additional threads based on network conditions.

In the following description, for purposes of explanation, numerous specific details are set forth to provide a thorough understanding of the disclosed concepts. As part of this description, some of this disclosure's drawings represent structures and devices in block diagram form in order to avoid obscuring the novel aspects of the disclosed embodiments. In this context, it should be understood that references to numbered drawing elements without associated identifiers (e.g., 100) refer to all instances of the drawing element with identifiers (e.g., 100a and 100b). Further, as part of this description, some of this disclosure's drawings may be provided in the form of a flow diagram. The boxes in any particular flowchart may be presented in a particular order. However, it should be understood that the particular flow of any flow diagram is used only to exemplify one embodiment. In other embodiments, any of the various components depicted in the flowchart may be deleted, or the components may be performed in a different order, or even concurrently. In addition, other embodiments may include additional steps not depicted as part of the flowchart. The language used in this disclosure has been principally selected for readability and instructional purposes and may not have been selected to delineate or circumscribe the disclosed subject matter. Reference in this disclosure to "one embodiment" or to "an embodiment" means that a particular feature, structure, or characteristic described in connection with the embodiment is included in at least one embodiment, and multiple references to "one embodiment" or to "an embodiment" should not be understood as necessarily all referring to the same embodiment or to different embodiments.

It should be appreciated that in the development of any actual implementation (as in any development project), numerous decisions must be made to achieve the developers' specific goals (e.g., compliance with system and business-related constraints), and that these goals will vary from one implementation to another. It will also be appreciated that such development efforts might be complex and time consuming but would nevertheless be a routine undertaking for those of ordinary skill in the art of image capture having the benefit of this disclosure.

### Media Transmission

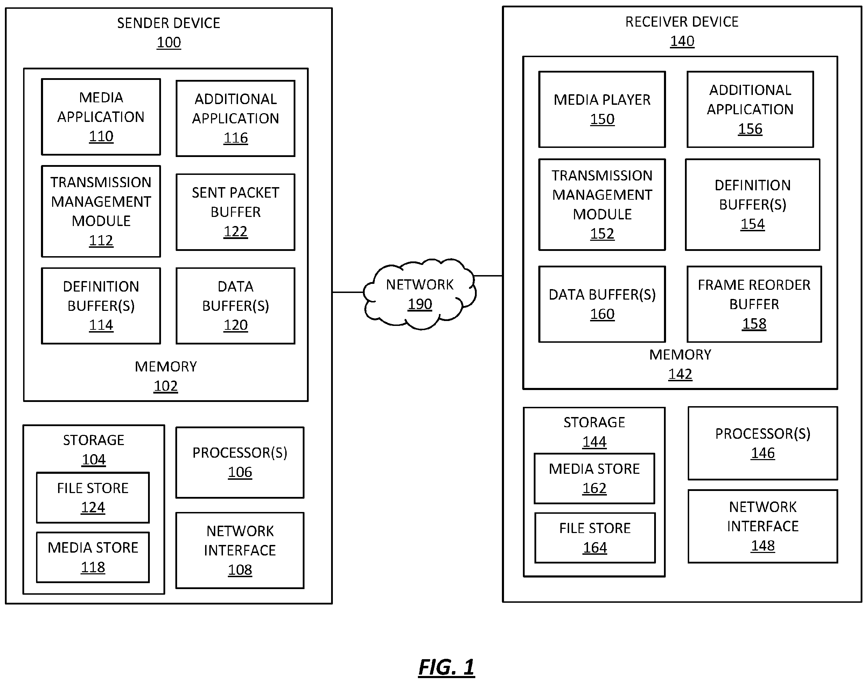

Referring to FIG. 1, a simplified block diagram is depicted of a sender device 100 and a receiver device 140 coupled across a network 190. The network 190 may be any type of network, such as a local area network (LAN), a wide area network (WAN), a wireless network, a cellular network, the Internet, or a combination thereof. Transmission between the sender device 100 and the receiver device 140 may be affected by varying characteristics of the network 190, such as bandwidth, delay, packet loss, congestion, or the like.

The sender device 100 may be any type of electronic device or system of devices that can transmit media streams, for example immersive media streams. In some embodiments, the sender device 100 may generate media for the media streams, or may receive the media from one or more additional devices, for example across a network. Accordingly, although not shown, sender device 100 may include or be communicably coupled to one or more cameras, microphones, depth sensors, or other sensors from which media streams, such as immersive media streams, can be created.

The sender device 100 may include one or more processors 106, memory 102, storage 104, and network interface 108. The processor 106 may be configured to execute computer readable code hosted by a memory of sender device 100, such as memory 102. The processor 106 may be any type of processor, such as a central processing unit (CPU), a graphics processing unit (GPU), a digital signal processor (DSP), an application-specific integrated circuit (ASIC), a field-programmable gate array (FPGA). In addition, the processor 106 may include one or more processors of a same or different type.

Memory 102 may include one or more memory devices or computer readable media of a same or different type, such as random access memory (RAM), read-only memory (ROM), flash memory, or the like, or some combination thereof. According to one or more embodiments, memory 102 may store computer readable code executable by one or more processors, such as processor(s) 106. Storage 104 may be any type of storage, such as a hard disk drive, a solid state drive, an optical drive, a magnetic tape drive, or a combination thereof. Storage 104 may be used to store data used by the components hosted in memory 102, such as media store 118, which may include frame-based media data, or data corresponding to media such as streaming media, or other types of application data, for example in file store 124. The network interface 108 may be any type of interface that can communicate with the network 190, such as an Ethernet interface, a Wi-Fi interface, a Bluetooth interface, a cellular interface, or a combination thereof.

In the example shown, memory 102 may include one or more executable modules in the form of computer readable code. For example, as shown, memory 102 may include media application 110. Media application 110 may include one or more applications or other computer program modules to obtain or generate various types of media, including immersive media. The media application 110 may support the creation and management of multiple media types within a single framework, such as images, audio, and the like. In some embodiments, the media application 110 handles different types of media simultaneously to synchronize and integrate different media types into a single frame. In some embodiments, the media application 110 supports the creation of immersive media experiences, such as augmented reality (AR), virtual reality (VR), and mixed reality (MR), and may generate and/or transmit the media dynamically, such as in a live format or a live stream. Additional application 116 may include one or more applications that may or may not be used for media creation, display, or transfer, and may generate any kind of application data.

Memory 102 may also include a transmission management module 112. The transmission management module 112 may prepare and provide media frames for transmission in a media stream. The transmission management module 112 may be part of a protocol layer, separate from an application layer that includes media application 110 and additional application 116. To that end, the protocol layer may support data transmission for different types of data and/or different types of applications. In some embodiments, the transmission management module 112 may use an initial handshake message with a receiving device to convey the type of data to be transmitted. The transmission management module 112 may generate a definition object which may include information defining the data that makes up a particular portion of the media stream. In some embodiments, the definition object may be a frame definition object that defines the data that makes up a particular frame. Additionally, or alternatively, a file definition object may define the data that makes up a particular data chunk of a file.

According to one or more embodiments, the definition object comprises a set of attributes for each frame or chunk of data, including an identifier, a size, and one or more additional variables. The frame definition object may include a number of packets and/or size of the frame, as well as a timecode object such as a frame number, frame rate, or the like. As another example, the frame definition object may include video attributes of each video object, audio attributes of each audio object, number of packets and/or size for each media object, or the like. Video attributes may include, for example, width, height, stride, pixel format, and the like. Audio objects may include, for example, sampling rate, sample size, audio format, and the like. Other attributes encoded in the frame definition object may include a timecode object, such as a frame number, frame rate, and the like. In some embodiments, the frame definition object provides flexibility to encode different types of metadata that may be used for the stream, such as encoding hints, object detection coordinates and/or labels, projection type, calibration data, presentation state commands such as fade, cut and graphic insertion, or the like. For example, multiple video objects may be included in the frame, which are captured by different cameras having different characteristics, such as camera calibration parameters, which may be applied at the receiving device during rendering. As another example, numeric or text information may be encoded into the frame definition which is used for populating an overlay for the frame. Further, the types of metadata may be defined at a production state, or by a sender device.

In some embodiments, the frame definition object may include a keyframe flag, indicating that the particular frame is considered of a higher priority for transmission than some other frames in the stream. In doing so, keyframes are prioritized for reliable delivery across a network. Keyframes may be used to reduce the likelihood of loss of context or causing a jarring user experience during playback. For example, frames that include scene changes, transitions, or the start of new segments may be marked as keyframes using the keyframe flag. To that end, a logic may be applied to the video stream to detect keyframes, or the keyframes may be automatically or manually identified, for example during production of the video stream. In some embodiments, the logic may be applied by a media application to assign a keyframe status based on application logic, presentation requirements, or other criteria. In doing so, the keyframe designation is managed at the protocol level and is codec-agnostic.

In some embodiments, the protocol supports dynamic, per-frame object sizes and types, allowing per-frame heterogeneity in the stream. Accordingly, the frame definition object may specify the size and number of packets for each of the different media objects in the frame, such as one or more video objects and/or one or more audio objects in the frame. For example, in a single stream, one frame may include two video objects for stereoscopic content, whereas another may include a single image. Because each frame may include a different makeup of media objects, types, and sizes, the frame definition object for the frame may provide an indication of the media makeup of the frame.

According to one or more embodiments, the definition object may additionally support non-frame-based payloads. As an example, the transmission management module 112 may organize the file into data chunks, generate a file definition object, such as a file identifier and size of a corresponding chunk. In some embodiments, the size of chunks may be predefined, or may be determined by the transmission management module. For example, the chunk size may be based on a round trip time (RTT), a maximum bit rate available, or some combination thereof. In some embodiments, frame-based media may also used a chunking technique to transmit data such that each chunk may or may not comprise a single frame (that is, rather than a frame, the definition object may correspond to a chunk of data that includes data for a partial frame, or more than one frame), and the definition object provides the indication of the size.

The transmission management module 112 may perform a packetization process to divide a definition objects and associated data into smaller network packets. For the frame definition object, each frame definition packet may include a packet header which includes such information as a packet type, sequence number, timestamp, frame number, packet payload size, total frame definition packet count, packet number, resend marker, frame definition size, or the like. According to some embodiments, the frame definition packets may be placed in one or more definition buffer(s) 114 for transmission. Similarly, a file transfer transmission may include a file definition object which is organized into packets and placed in the one or more definition buffer(s) 114. Upon transmission, the frame definition packets may be placed in a sent buffer 122, from which the packets can be retrieved in order to resend the packets. Further, in some embodiments, the transmission management module 112 may manage expiration criteria for packets such that the transmission management module 112 determines that a packet is not expired prior to retransmission. As another example, the transmission management module 112 may remove packets from the sent packet buffer 122 upon the packet satisfying an expiration criterion for a particular packet, data chunk/frame, and/or transmission.

The transmission management module 112 may also packetize the media content that comprises the media frame, or other data that comprise data chunks. The media content may include, for example, one or more images, one or more audio channels, and the like. The media content may be divided into media packets that each have a media packet header. The media packet header may include information regarding the contents of the packet, such as a packet type, sequence number, timestamp, frame number, media number, packet number, packet payload size, resend marker, and the like. According to some embodiments, the media packets may be placed in one or more data buffer(s) 120 for transmission. In some embodiments, if a media packet is received prior to all of the frame definition packets, the media packet may be placed in a homeless packet buffer until the data buffers 120 are allocated. Upon transmission, the media packets may be placed in a sent packet buffer 122, from which the packets can be retrieved in order to resend the packets. The media packets may be placed in a same or different sent buffer than the frame definition packets. The transmission management module 112 may perform other various functions related to transmission, such as receiving retransmission requests, retransmitting media packets, performing flow control, performing encryption and authentication, and supporting multithreaded transmission. Further, in some embodiments, the transmission module 112 may toggle transmission protocols over which packets are transmitted such that different types of packets can be transmitted using different protocols. As an example, frame definition object packets may be sent over a transmission control protocol ("TCP"), while file definition object packets may be sent over a user datagram protocol ("UDP").

Receiver device 140 may be a multifunctional electronic device, such as a set-top box, digital media player, mobile phone, tablet computer, personal digital assistant, portable music/video player, wearable device, or any other electronic device or system of devices that includes a media playback system. According to one or more embodiments, receiver device 140 may be configured to obtain and/or present immersive media, and may be configured to receive and store other types of application data. For example, receiver device 140 may include a wearable device such as a head mounted device configured to present immersive media to a user.

The receiver device 140 may include one or more processors 146, memory 142, storage 144, and network interface 148. The processor 146 may be configured to execute computer readable code hosted by memory 142 of receive device 140, such as memory 142. The processor(s) 146 may include any type of processor, such as a central processing unit (CPU), a graphics processing unit (GPU), a digital signal processor (DSP), an application-specific integrated circuit (ASIC), a field-programmable gate array (FPGA). In addition, the processor(s) 146 may include one or more processors of a same or different type.

Memory 142 may include one or more memory devices of a same or different type, such as random access memory (RAM), read-only memory (ROM), flash memory, or the like, or some combination thereof. According to one or more embodiments, memory 142 may store computer readable code executable by one or more processors, such as processor(s) 146. Storage 144 may be any type of storage, such as a hard disk drive, a solid state drive, an optical drive, a magnetic tape drive, or a combination thereof. Storage 144 may be used to store data used by the components hosted in memory 142, for example including user preferences or profiles, media data, or the like. The network interface 148 may be any type of interface that can communicate with the network 190, such as an Ethernet interface, a Wi-Fi interface, a Bluetooth interface, a cellular interface, or a combination thereof.

In the example shown, memory 142 may include one or more executable modules in the form of computer readable code. For example, as shown, memory 142 may include media player 150 and/or additional application 156. In some embodiments, the media player 150 supports the playback of immersive media experiences, such as augmented reality (AR), virtual reality (VR), and mixed reality (MR), and may support playback of live media or media streams. Additional application 156 may support an additional type of data, and may or may not support immersive media or other kinds of media.

Memory 142 may also include a transmission management module 152. The transmission management module 152 may receive and rebuild packets from a media stream or other transmission, such as a file transfer. The transmission management module 152 may receive a definition object. The transmission management module 152 may perform a depacketization process to reconstruct a frame or data chunk from smaller network packets. For the frame definition object, the transmission management module 152 may receive a set of definition packets from which the definition object can be constructed. According to some embodiments, the frame definition packets may be placed in one or more definition buffer(s) 154. The transmission management module 152 may determine whether all expected packets for the frame definition object have been received based on data in the frame definition header, such as the total frame definition packet count packet number, frame definition size, and the like. In some embodiments, if the transmission management module 152 determines that a packet has been lost, the transmission management module 152 may send a retransmit request to the sender device 100 for the missing packet. Upon receiving the expected frame definition packets, the transmission management module 152 may reconstruct the frame definition object. In some embodiments, the transmission management module 152 may instead receive a message that a requested packet for retransmission has expired, in which case the associated frame/data chunk may be removed from the associated buffers. In some embodiments, the transmission management module 152 may allocate one or more data buffer(s) 160 based on the information encoded in the frame definition object, such as the types of media in the frame, the size of the media objects in the frame, and the like.

The transmission management module 152 may also depacketize the media content that comprises the media frame. Upon receiving the media packets, the transmission management module 152 may determine the packet type from the header, place the depacketized media in the allocated data buffer(s) 160 in accordance with the packet type. According to one or more embodiments, the data buffer(s) may be allocated as one or more buffers for each media type, such as image and audio. The data buffer(s) may be byte arrays containing depacketized media data. Once the packets for the media frame are received, the transmission management module 152 can reconstruct the frame. The reconstructed frame can then be released to an application, such as media player 150. Similarly, once the packets for a file data chunk are received, the data chunk may be reconstructed, such that the file can be reconstructed and released to additional application 156.

In some embodiments, reconstructed media frame may be placed or identified in a frame reorder buffer 158. The frame reorder buffer 158 may include a list or other indication of completed frames that have been received for reordering, for example if a frame in a series of frames is determined to be missing.

The transmission management module 152 may perform other various functions related to transmission, such as performing flow control by tracking round trip time (RTT) to the time it takes for a signal to travel from the sender to the receiver and back again or determining inter-frame arrival time. The RTT and/or inter-frame arrival time may be used to resize the frame reorder buffer 158, or to determine a data chunk size. To that end, the frame reorder buffer 158 may be a dynamically-sized buffer used to sort completed packets that are received and/or reconstructed out of order.

### Example Frame Transmission

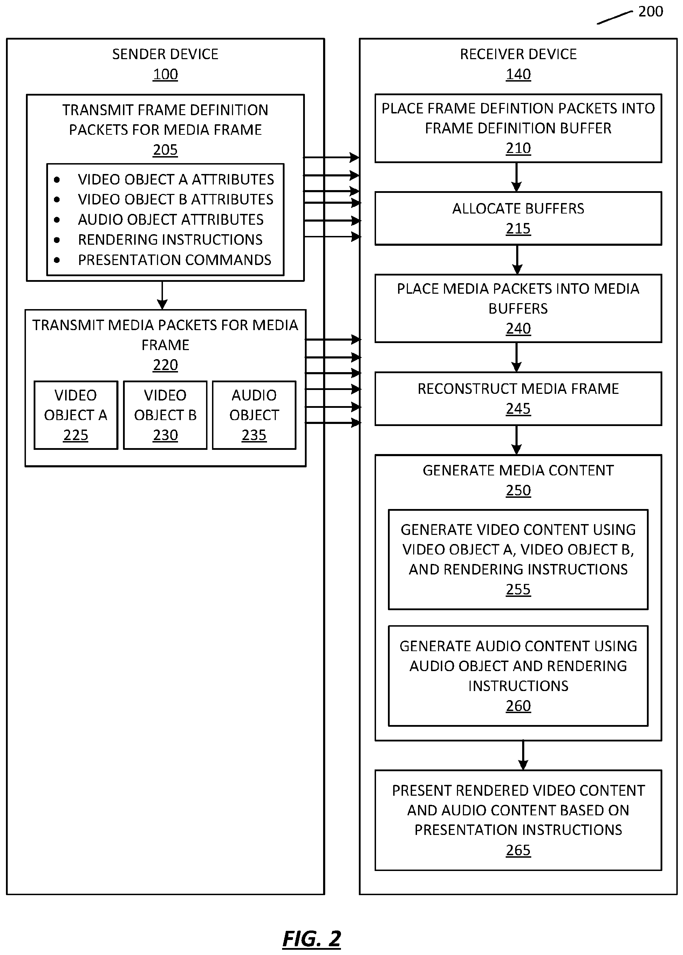

FIG. 2 illustrates an example technique for transmission of media content using the disclosed protocol, in accordance with one or more embodiments. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flow diagram 200 begins at 205, where the sender device 100 generates and transmits a frame definition object for a particular media frame. The frame definition object describes the structure and content of the forthcoming media frames. This may include, for example, media object types, media object sizes, packet counts, per-object attributes, and other information used for reconstructing the frame. In the example shown, the frame definition packets include attributes for two video objects, described as video object A and video object B. The frame definition object also include audio object attributes. In addition, the frame definition object includes rendering instructions, and presentation commands. As an example, video object A 225 may correspond to a left eye image of a stereoscopic frame pair, and video object B 230 may correspond to a right eye image of the stereoscopic frame pair. Audio object 235 may include one or more audio channels associated with the frame. The frame definition object may be organized in a set of frame definition packets, which are transmitted to the receiver device 140.

At block 210, the receiver device 140 receives the frame definition packets from the sender device 100. The receiver device 140 may place the received frame definition packets into definition buffer(s). The receiver device 140 may detect, from the frame definition packets, attributes about the forthcoming media packets, and allocate data buffer(s) for the forthcoming media packets accordingly, as shown at 215. The data buffers may be allocated based on the information contained in the frame definition object, such as the frame identifier, the media type identifiers, the number of packets per media type, and the size of each media type.

After the frame definition packets are transmitted, the sender device 100 transmits the media packets for the media frame, as shown at 220. The placement may be performed based on the information contained in the packet headers, such as object type, media type, or the like. The placement may be performed in any order, as the packets may arrive out of order. In the example shown the frame includes video object A 225, video object B 230, and audio object 235.

As the media packets arrive out of order, the receiver device 140 places the packets into the corresponding data buffers at 240. In some embodiments, the media packets are placed by referencing the per-packet frame index, media index, packet index included in each packet header, or the like. After receiving the media packets, the flowchart 200 proceeds to 245, where the receiver device 140 reconstructs the media frame. The reconstruction operation yields separate media objects that correspond to the objects identified in the frame definition, including video object A 225, video object B 230, and audio object 235.

The flow diagram 200 proceeds to 250, where the receiver device 140 generates the media content for the frame. Generating the media content may include, a shown at 255, generating video content using video object A, video object B, and rendering instructions. For example, a graphics engine may generate video content by processing video object A 225 and video object B 230 in accordance with the rendering instructions the receiver device 140 received from the frame definition packets. For example, the frames may be rendered using information such as projection type, calibration information, or the like, for each video object. Similarly, at 260, the audio object may be generated by applying rendering instructions from the frame definition object reconstructed from the frame definition packets, such as spatial audio coordinates, comfort level adjustments, or the like.

The flow diagram 200 concludes at block 265, where the rendered video and audio objects are presented. In some embodiments, the media may be presented in accordance with presentation instructions received in the frame definition object. For example, the frame definition object may include presentation commands, such as fade, cut, insert a graphic, or the like. The rendered content may be presented at the receiver device 140, such as an electronic device having one or more displays, one or more speakers or audio output components, or the like.

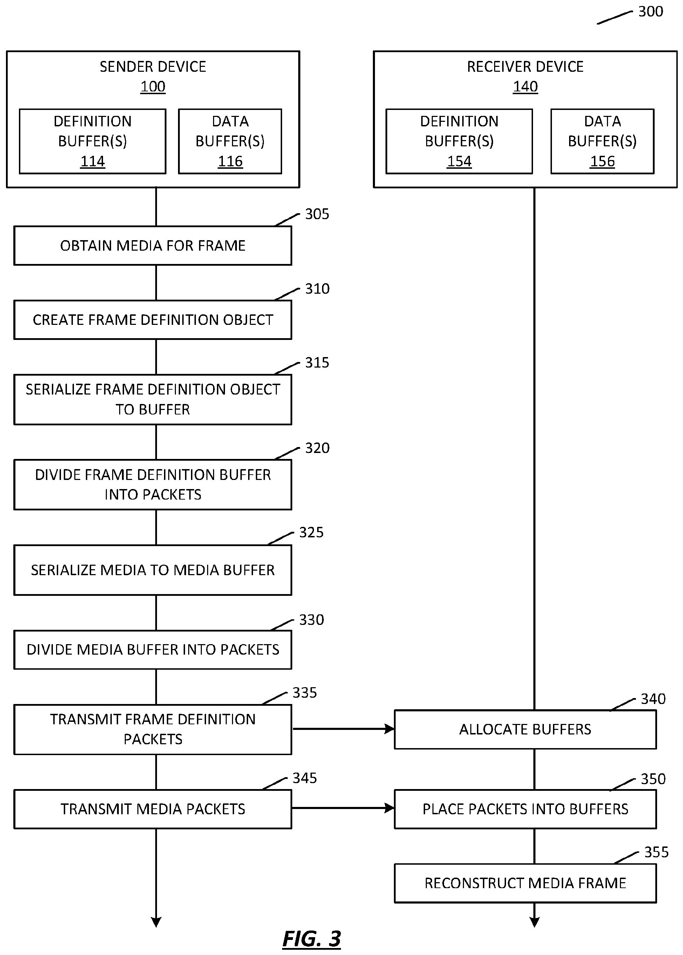

Turning to FIG. 3, a flow diagram is presented for media frame transmission, according to one or more embodiments. In particular, flow diagram 300 shows an example technique for producing and transmitting media frames having multiple media types, in accordance with one or more embodiments. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flow diagram 300 begins with sender device 100 obtaining a media frame at block 305. According to one or more embodiments, the media frame may include one or more media types and/or one or more media objects, such as two or more audio channels for a single frame, stereoscopic frame pairs for a single frame, or the like. In some embodiments, the media frame correspond to media for a particular frame of an immersive experience. In some embodiments, the sender device 100 may generate the media for the media frame. For example, the sender device 100 may include one or more sensors which may capture a surrounding environment from which the immersive experience is generated. Alternatively, the sender device 100 may receive the immersive content from one or more remote devices. According to one or more embodiments the media frame may include media for a live stream, such as media that is captured and/or generated at the time of transmission.

The flow diagram 300 proceeds to block 310, where the sender device creates a frame definition object for the media frame. The sender device 100 may generate the frame definition object to include information related to the media comprised in the frame. For example, the frame definition object may be a structure that contains information about the media frame, such as a frame identifier, such as a frame number, a frame index, or a frame timestamp, that uniquely identifies the media frame. The frame definition object may also include a plurality of media type identifiers, such as image identifiers, audio identifiers, or metadata identifiers, that indicate the types and number of media types contained in the media frame. The frame definition object may include components for managing characteristics about the media frame, or transmission of the frame. For example, a key frame flag, such as a Boolean value, can be incorporated in the frame definition object to indicate whether the media frame is a key frame, such as a frame that can be decoded independently of other frames, or a frame that is used for other processes, such as determining media stream quality or continuity. Other data that may be included in the frame definition object include a number of packets per media type, such as an integer value, that indicates how many packets are expected for each media type or media object (for example, in the situation where there are two or more media objects of a same type) in the media frame, and a size of each media type, such as a byte value, that indicates how big each media type is in the media frame.

The flow diagram 300 proceeds to block 315, where the sender device 100 serializes the frame definition object to a byte buffer. In some embodiments, the frame definition object may be transformed into a format to be transmitted across a network, for example in a sequence of bytes or other chunks of data. The serialized frame definition object may be stored in a byte buffer, such as the definition buffer 114 of the sender device 100.

At block 320, the sender device 100 divides the definition buffer into packets to be transmitted across the network. The packets may be datagrams that contain portions of the a frame definition object in the definition buffer. Each packet may include a header that indicates the packet type, such as a frame definition packet type, and other information, such as a sequence number, a timestamp, a frame number, a packet payload size, a total frame definition packet count, a packet number, a resend marker, a frame definition size, and the like. The packets may be generated to have a size that is equal to or smaller than the maximum transmission unit (MTU) of the network 190. According to some embodiments, the MTU may not be predefined or otherwise known to the sender device 100. Accordingly, an MTU discovery technique may be performed. For example, the sender device 100 may connect to an intended receiver device 140 and emit periodically larger datagrams to the receiver device 140 until a maximum size is determined to be exceeded. The maximum size may be determined to be exceeded, for example, based on whether an acknowledgement is failed to be received in response to sending a discovery packet, or if the sender device 100 receives a size error on the socket used for transmission of the discovery packet.

Similarly, at block 325, where the sender device 100 serializes the media objects for the frame to a byte buffer. In some embodiments, the media objects may be transformed into a format to be transmitted across a network, for example in a sequence of bytes or other chunks of data. The serialized frame definition object may be stored in one or more byte buffers, such as data buffer(s) 120 of the sender device 100. In some embodiments, the serialized media data may be distributed across multiple media buffers. For example, each media object or media type in the frame may be inserted into one or more media buffers. Alternatively, media buffers may hold serialized media data of multiple media types. At block 330, the sender device 100 divides the media buffer into packets to be transmitted across the network. Each packet may include a header that indicates the packet type, such as a type of media, and other information, such as a sequence number, a timestamp, a frame number, a packet payload size, a total packet count for the media or media object for the frame, a packet number, a resend marker, a frame definition size, and the like.

The flow diagram 300 proceeds to block 335, where the sender device 100 transmits the frame definition packets to the receiver device 140. The transmission may be performed over one or more UDP ports using the network interface 108 of the sender device 100. The UDP ports may be predetermined or negotiated between the sender device 100 and the receiver device 140. In some embodiments, the frame definition data may be encrypted and authenticated prior to transmission.

At block 340, the receiver device 140 receives the frame definition packets from the sender device 100. The receiver device 140 may receive the frame definition packets over one or more UDP ports using the network interface 148 of the receiver device 140. According to some embodiments, the receiver device 140 may place the received frame definition packets into definition buffer(s) 154. The receiver device 140 may decrypt encrypted packets, and reconstruct the frame definition object. The receiver device 140 allocates data buffer(s) 160 for the media frame based on the information in the reconstructed frame definition object. The media buffers may be allocated based on the information contained in the frame definition object, such as the frame identifier, the media type identifiers, the number of packets per media type, and the size of each media type.

After the frame definition packets are transmitted, the flow diagram 300 proceeds to block 345, and the sender device transmits the media packets. At block 350, the receiver device 140 places the media packets into the media buffers in accordance with the allocation. The placement may be performed based on the information contained in the packet headers, such as object type, media type, or the like. The placement may be performed in any order, as the packets may arrive out of order.

The flow diagram 300 concludes at block 355 where the receiver reconstructs the media frame from the media packets. The reconstruction may be performed by the transmission management module 152 of the media player 150 of the receiver device 140, by combining the media data from the media packets according to the media type identifiers and the media buffer allocation. Further, the packets may be reordered based on data in the packet headers. The reconstruction may result in a media frame object that contains the media data of the media frame, such as images, audio, and metadata. The decoded media frame may then be processed by the receiving device. For example, the receiver device 140 may perform such functions as decoding, rendering, displaying, playing, storing, or transmitting the media frame.

### Missing Packet Handling

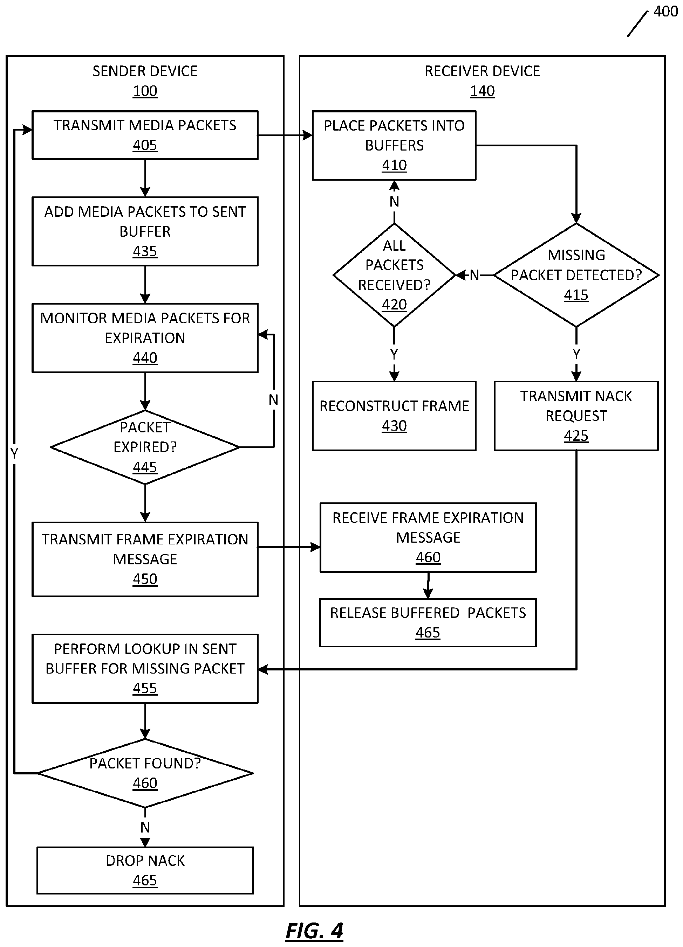

According to some embodiments, the receiver device 140 can detect missing packets and request retransmission. Because reconstruction of the frame does not rely on receiving the packets in a particular order, the missing packets can requested while later packets are received. FIG. 4 shows a flowchart of a technique for handling missing packets. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flowchart 400 begins at block 405, where the sender device 100 transmits media packets for a media frame to the receiver device 140, as described above with respect to FIGs. 2-3. At block 410, the receiver device 140 places the media packets into media buffers, as described in more detail above with reference to FIG. 2. At block 415, the receiver device 140 determines whether a missing packet is detected. The determination may be performed based on the sequence numbers in the headers of the received packets. If the receiver device 140 detects a gap in the sequence numbers, then the receiver device 140 may infer that a packet has been lost in transit. If no gap is detected (and, thus, no missing packets are detected), then the flowchart proceeds to block 420, where a determination is made at block 420 as to whether all packets have been received. The determination may be made based on information encoded in the packet headers for the frame definition object or the media. For example, the headers may indicate a frame size, a media object size, a number of packets, or the like. If all packets have been received, then the flowchart concludes at block 430, and the media frame is reconstructed. The media packets may be reordered according to sequence identifiers in the packet headers. According to one or more embodiments, the reconstruction may be performed by combining the media data from the media packets according to the media type identifiers and the media buffer allocation. If, at block 420, a determination is made that all packets have not been received, then the flowchart returns to block 410, and the receiver device 140 continues to place received packets for the frame in the buffers.

Returning to block 415, if a determination is made that a packet is missing, then the flowchart proceeds to block 425. At block 425, the receiver device 140 transmits a retransmission request to the sender device 100, for example as a NACK request. The retransmission request may be a control message that indicates that a media packet is missing and needs to be retransmitted. The retransmission request may include the sequence number and the frame number of the missing packet.

Upon receiving the retransmission request, the sender device 100 performs a lookup operation for the missing packet in the sent media buffer, as shown at block 455. The lookup operation may be performed based on a media packet identifier, such as a sequence number and the frame number of the missing packet, which may be included in the retransmission request. A determination is made at block 460 as to whether the packet is found. The packet may not be found, for example, if the packet, or frame to which the packet belongs, has expired. If the packet is found, the sender device 100 may retrieve the requested packet from the sent media buffer and the flowchart returns to block 405 where the media packet is retransmitted. In some embodiments, retransmission of missing packets are prioritized by the sender device over unsent packets. The flowchart 400 proceeds until all packets are received by the receiver device 140, and the media frame is reconstructed, as shown at block 435. Alternatively, if the packet is not found at block 460, then the flowchart concludes at block 465 and the retransmission request is dropped. This may occur, for example, because the packet has expired and been removed from the sent buffer, in which case the sender device 100 may have transmitted an expiration message for the packet prior to receiving the retransmission request.

Returning to block 405, as the sender device 100 transmits packets, the sender device 100 adds the media packets to a sent packet buffer, as shown at block 435. The sent packet buffer may be a memory buffer that stores media packets that have been transmitted by the sender device 100. The sent packet buffer may maintain sent packets temporarily in order to retrieve packets upon receiving a retransmission request. Packets may stay in the sent buffer for a configurable amount of time, for example based on an expiration criteria managed by the sender device 100. This configurability allows for a trade-off between latency and reliability. The longer the sender holds onto the sent packets, the more time the receiver has to request retransmission for any lost packets. If completing the frame is more important, the sender can hold onto the packets for a longer period, which will cost more memory and latency. Conversely, if low latency is prioritized over reliability, the packets can be discarded from the sent buffer after a shorter amount of time. The expiration criterion may differ based on characteristics of the packet and/or the frame to which the packet belongs. For example, if the frame definition object for a frame to which the packet belongs indicates that the frame is a keyframe, then the transmission management module may implement a more aggressive retransmission policy, and may be maintained for a longer period of time than if a packet were not part of a keyframe.

At block 440, the media packets in the sent buffer are monitored to determine if the expiration criteria is satisfied. If, at block 445, the expiration criteria is not satisfied, then the flowchart returns to block 440, and the packets in the sent buffer are continuously monitored. If, at block 445, the expiration criteria is satisfied, then the flowchart proceeds to block 450, where the sender device generates and transmits a frame expiration message.

The receiver device 140 receives the frame expiration message at block 460. The flowchart then concludes at block 465 where the buffered packets associated with the expired frame are released.

### Multithread Transmission

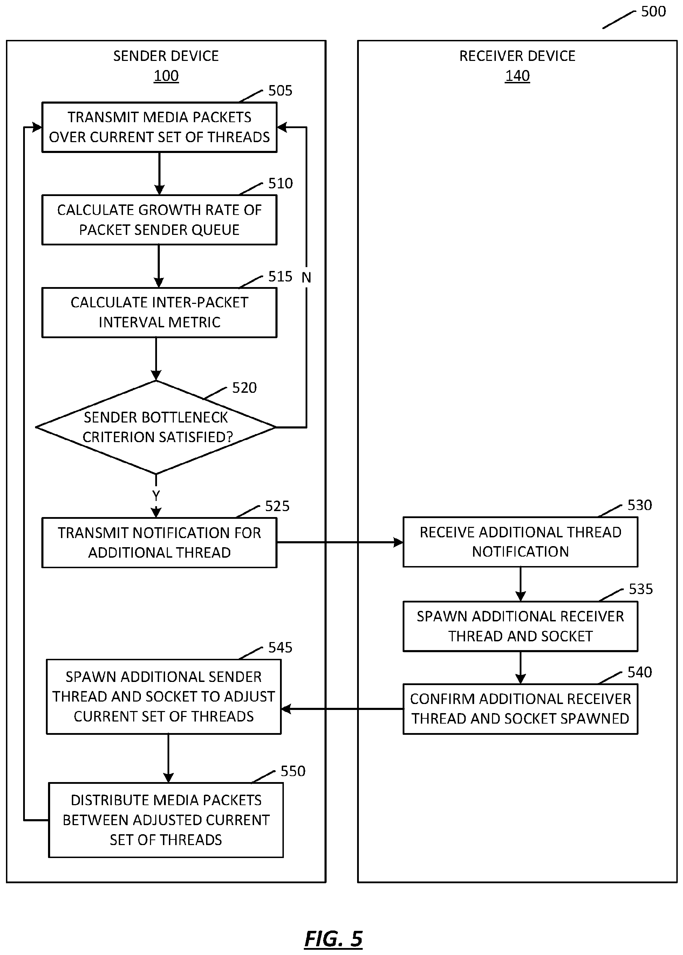

According to some embodiments, the IMTP protocol allows for multithread transmission, and dynamically spawning additional threads during transmission. FIG. 5 is a flow diagram of an example process for multithreaded send/receive using IMTP. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flowchart 500 begins at block 505, where the sender device 100 transmits media packets for a media frame over a current set of threads. The current set of threads may be a set of sender threads that are used by the sender device 100 to transmit media packets, for example, over one or more UDP ports. The current set of threads may initially include a default or initial set number of threads, but may be adjusted over time, as described in more detail below.

At block 510, the sender device 100 calculates a growth rate of a packet sender queue. The packet sender queue may be a queue that stores media packets that are waiting to be transmitted by the sender device 100, for example in the media buffers. The growth rate may be a metric that indicates how fast the packet sender queue is filling up or emptying out. The growth rate may be calculated based on the number of media packets that are added to or removed from the packet sender queue over a period of time.

The flowchart 500 proceeds to block 515, where the sender device 100 calculates an inter-packet interval metric. The inter-packet interval metric may be a metric that indicates the time between sending consecutive media packets by the sender device 100. The inter-packet interval metric may be calculated, for example, based on the timestamps of the media packets that are transmitted by the sender device 100.

At block 520, a determination is made as whether the growth rate and/or the inter-packet interval metric satisfy a sender bottleneck criterion. The sender bottleneck criterion may be a criterion that indicates that the sender device 100 should add additional threads for transmission. For example, the sender bottleneck criterion may indicate that the sender device 100 is unable to transmit media packets at the desired rate due to limitations such as processing limitations or network bandwidth limitations. In some embodiments, the sender bottleneck criterion may be satisfied when the growth rate is positive and the inter-packet interval metric is greater than a threshold value. The threshold value may be based on the target bitrate computed by a flow controller. If a determination is made that the sender bottleneck criterion is not satisfied, then the flow diagram 500 returns to block 505, and the sender device 100 continues to transmit media packets over the current set of threads.

Turning to block 520, if a determination is made that the sender bottleneck criterion is satisfied, then the flowchart 500 proceeds to block 525. At block 525, the sender device 100 transmits a notification for the receiver device 140 to spawn an additional thread. The notification may be a control message that indicates that the sender device 100 intends to spawn an additional sender thread and open an additional UDP port for transmitting media packets. The notification may include the number and the port number of the additional sender thread.

At block 530, the receiver device 140 receives the notification for the additional thread from the sender device 100. The flowchart proceeds to block 535, where the receiver device 140 spawns an additional receiver thread and socket. The additional receiver device thread and socket may be used by the receiver device 140 to receive media packets from the additional sender thread and port of the sender device 100.

At block 540, the receiver device 140 confirms that the additional receiver thread and socket are spawned. The confirmation may be a control message that indicates that the receiver device 140 is ready to receive media packets from the additional sender thread and port of the sender device 100. The confirmation may include identifying information for the additional receiver thread and socket.

The flowchart 500 proceeds to block 545, where the sender device 100 receives the confirmation from the receiver device 140. The sender device 100 spawns an additional sender thread and socket. The additional sender thread and socket may be used by the sender device 100 to transmit media packets to the additional receiver thread and port of the receiver device 140. For example, the sender device can spawn the additional thread and socket to connect to the additional sender thread identified by the sender device in the confirmation message.

The flowchart 500 concludes at block 550, where the sender device 100 redistributes the media packets over the adjusted current set of threads. The adjusted current set of threads may include the set of sender threads from block 505, along with the additional sender thread spawned at block 545. In some embodiments, the distribution may be performed based on the load of each sender thread, in order to balance the load among the sender threads and to maximize the throughput of the media stream. The flowchart 500 can return to block 505 and continue transmitting packets with the new current set of threads, including the newly spawned thread.

### RTT Determination

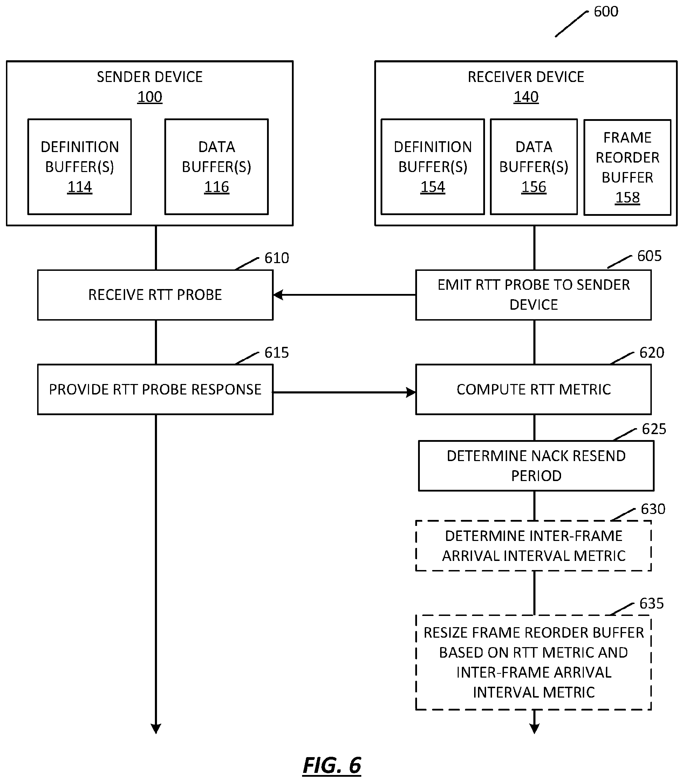

FIG. 6 depicts a flowchart of an example technique for managing re-transmission requests. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flowchart 600 begins at block 605, where the receiver device 140 emits an RTT probe to the sender device 100. The RTT probe may be a control message that is used to measure the round-trip time (RTT) between the sender device 100 and the receiver device 140. The RTT may be the time it takes for a packet to travel from the sender device 100 to the receiver device 140 and back. According to some embodiments, the RTT probe may include a timestamp that indicates the time of emission of the RTT probe.

At block 610, the sender device 100 receives the RTT probe from the receiver device 140. Then, at block 615, the sender device provides an RTT probe response to the receiver device 140. The RTT probe response may be a control message that is used to acknowledge the receipt of the RTT probe and to enable the calculation of the RTT. In some embodiments, the RTT probe response may include the timestamp from the RTT probe, or other identifying information corresponding to the RTT probe to which the sender device 100 is responding.

The flowchart 600 proceeds to block 620, where the receiver device 140 receives the RTT probe response from the sender device 100, and computes the RTT metric. The RTT metric may be a metric that indicates the round-trip time between the sender device 100 and the receiver device 140 based on the RTT probe. According to one or more embodiments, the RTT metric may be computed by based on the timestamp of the RTT probe and the RTT probe response. Alternatively, the receiver device 140 may compare a known time at which the RTT probe was transmitted to a time at which the RTT probe response was received.

The diagram proceeds to block 625, where the RTT metric may be used by the receiver device to determine a NACK resend period. That is, the receiver device 140 may use the RTT metric to determine an interval between successive NACK requests for a given packet. Further, in some embodiments, the receiver device 140 may use the RTT metric to determine how many packets can be re-requested at once.

According to one or more embodiments, frames may be added to the frame reorder buffer 158 will buffer frames until an expiration occurs, for example as described above with respect to FIG. 4. Alternatively, in some embodiments, the IMTP protocol allows for dynamic buffer resizing during transmission by a receiver device. In doing so, the protocol provides flexibility for adjusting for out of order frames. At optional block 630, the receiver device 140 determines the inter-frame arrival interval metric. The inter-frame arrival interval metric may be a metric that indicates the time between receiving consecutive media frames by the receiver device 140. The inter-frame arrival interval metric may be determined based on the timestamps of the media frames that are received by the receiver device 140. Alternatively, the inter-frame arrival interval metric may be based on an amount of time between when two sequential packets are received, for example according to sequence identifiers in the packet headers.

The flowchart 600 concludes at optional block 635, where the receiver device 140 resizes the frame reorder buffer based on the RTT metric and the inter-frame arrival interval metric. The frame reorder buffer 158 may be a buffer of the receiver device 140 that holds completed frames, or references to completed media frames, for reordering prior to providing the frames to a consumer, such as a media player. The frame reorder buffer may be resized in order to accommodate out of order frames, for example if a frame is completed out of order, while intermediate frames require more packets to be reconstructed. An example formula that takes into account the RTT metric and the inter-frame arrival interval metric may be as follows: $Size of frame reorder buffer = max \left(2,\left(2*RTT\right)/\left(inter-frame interval*1.15\right)\right)$

The formula may aim to adjust the size of the frame reorder buffer to accommodate the expected number of out-of-order frames that may arrive due to the network delay and the frame rate. The process may conclude, and the resized frame reorder buffer may be used to reorder additional frames from the transmission.

### Comfort Data Implementation

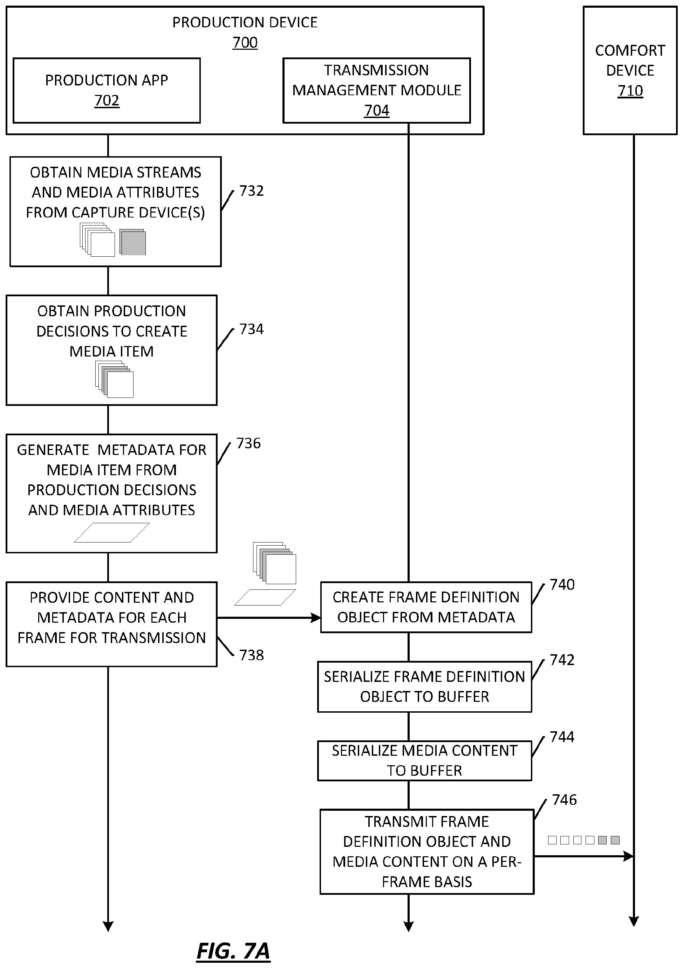

Turning to FIGs. 7A-7C, an example flow diagram is presented which illustrates a flow diagram of a technique for using the immersive media transport protocol to transport media content and metadata related to playback adjustments. The flow diagram includes a production device 700, a comfort device 710, and a playback device 720. The flow diagram presents an example of how the described protocol can be used to provide metadata for a media stream such that devices downstream can adjust or add to the metadata, and/or use the metadata for media stream processing. Accordingly, the described protocol enables a pipeline between capture and playback where the metadata used for rendering the media item is preserved frame-by-frame as the frames are passed through the servers and devices in the pipeline.

FIG. 7A shows production device 700 interacting with comfort device 710. Production device 700 may include a production application 702, and a transmission management module 704. According to one or more embodiments, the production application 702 may be used by a producer to generate media content to generate media content. Transmission management module 704 may be an API or other tool to manage transmission using the described protocol.

The flow diagram of FIG. 7A begins at 732, where the production device obtains media streams and media attributes from capture devices. For example, the production device may be located in a production truck, in which a producer can view multiple streams of media content, and make decisions for how provide the media content, for example using production app 702. Thus, the flow diagram proceeds to block 734, where the production app 702 obtains production decisions provided by a producer to create the media item. For example, the producer may use the production applications 702 to make decisions about fades or cuts between scenes, camera transitions, or the like.

The flow diagram proceeds to block 736, where the production application generates metadata for a media item. The metadata may encode the production decisions at block 734 such that the production decisions can be employed on another device downstream. For example, the metadata may be indexed to identify the frame correspond to various production decisions. As another example, the metadata may be generated in the form of a timed metadata track such that the metadata can be aligned with the media item. The metadata may include other data, such as media attributes that may be determined at the production device 700, or from another source. For example, camera data corresponding to the different camera streams may be provided with the media streams. The camera data may include, for example, camera motion data captured by a motion sensor on the camera device during image capture, such as velocity, direction, rotation, acceleration, and the like. As another example, the camera data may include camera calibration data corresponding to each camera, or the like. At 738, the production app provides the produced media item and the associated metadata to the transmission management module 704.

The transmission management module 704 receives the media content and metadata and employs the transport protocol described herein. For each frame of media content, the transmission management module 704, transforms the content into a structure for transfer. In particular, at block 740, the transmission management module 704 creates a frame definition object from the metadata. According to one or more embodiments, the frame definition object comprises a set of attributes for each frame. The frame definition object may include a number of packets and/or size of the frame, as well as a timecode object such as a frame number, frame rate, or the like. As another example, the frame definition object may include video attributes of each video object, audio attributes of each audio object, number of packets and/or size for each media object, or other information such as production decisions, camera data, and the like. At block 742, the transmission management module 704 serializes the frame definition object to a frame definition buffer of the production device 700.

In addition, as shown at 744, the production device 700 also serializes the media content of the frame to one or more media buffers. In some embodiments the media included in the frame may include one or more different types of media objects, and/or multiple media objects of a same type. That is, the transmission management module may encode multiple types of media objects in a single frame.

The flow diagram of FIG. 7A concludes at 746, where the transmission management module 704 transmits the frame definition object and media content on a per-frame basis. In some embodiments, the transmission management module may transmit, on a per-frame basis, frame definition packets, followed by media packets.

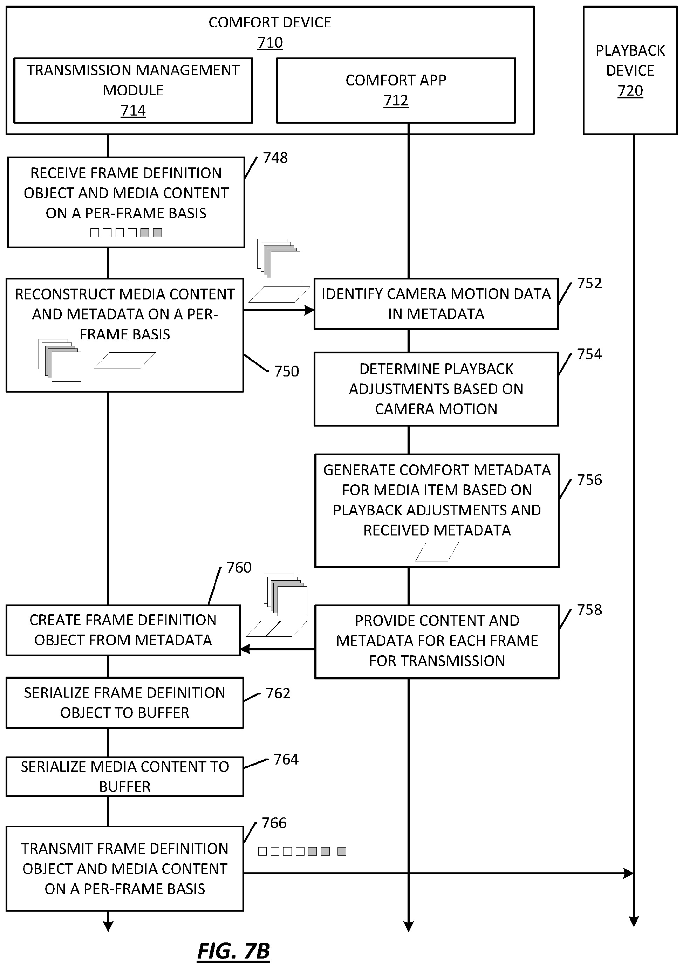

Turning to FIG. 7B, a continuation of the flow diagram of FIG. 7A is presented. The flow diagram of FIG. 7B includes the comfort device 710, and the playback device 720. The comfort device 710 may be a network device which is configured to adjust media items to satisfy comfort restrictions. The comfort device 710 includes a transmission management module 714 configured to employ the transmission protocol described herein. The comfort device also includes a comfort application 712, which may be configured to adjust playback or rendering behavior of a media item based on motion data.

The flow diagram of FIG. 7B begins at block 748, where the transmission management module 714 receives the packets for the frame definition object and media content on a per-frame basis. In some embodiments, the packets for the frame definition object may be received in one or more frame definition buffers, and the packets for the media objects may be received in one or more media buffers. In some embodiments, the transmission management module 714 may receive the packets associated with the frame definition object first, which may inform how to allocate media buffers for the frame, thereby allowing flexibility for frames of varying sizes and contents.

The flow diagram proceeds to 750, where the transmission management module 714 reconstructs the media content and metadata from the received media objects and/or frame definition object. Once the frame is reconstructed, the transmission management module 714 may provide the reconstructed frame to the comfort app 712.

According to one or more embodiments, the comfort app 712 may identify camera motion data in the metadata. According to one or more embodiments, the camera motion data may be encoded on a per-frame basis in the frame definition object for each frame. The flow diagram proceeds to block 754, where the comfort app 712 determines playback adjustments. For example, the comfort metrics may be determined based on characteristics of content in the media data, such as camera motion encoded in the frame definition object. Comfort metrics may be determined, for example, in the form of motion vectors, motion scores, or the like based on the camera motion. In some embodiments, the camera metrics may be compared against a comfort criterion to determine whether a presentation of the media item should be adjusted.

At block 756, the comfort metadata is generated for the media item to indicate, on a per-frame basis, whether the frame satisfies a comfort criterion. For example, a comfort flag may be generated for the frame. As another example, a rendering instruction may be encoded for the frame, such as reducing depth, warping the image data, or the like. At block 758, the comfort metadata is provided to the transmission management module 714 for transmission to the playback device 720.

The flow diagram proceeds to block 760, where the transmission management module creates a frame definition object from the metadata. Notably, the frame definition metadata for a particular frame may differ when created at block 760, than when it was received at block 748 and 750, even if the associated media content is or is not changed. For example, the comfort app 712 may identify and encode additional rendering instructions for a same set of media content for a given frame, thereby adding to the instructions previously encoded in the frame definition object by the production device 700.

At block 762, the transmission management module 714 serializes the frame definition object to a frame definition buffer of the comfort device 710. In addition, as shown at 762, the comfort device 710 also serializes the media content of the frame to one or more media buffers. In some embodiments the media included the same or different types of media objects as was received at block 748-750. For example, in some embodiments, the comfort device 710 may add additional media objects to the frame. At 766, the transmission management module 714 transmits the frame definition object and media content on a per-frame basis to the playback device 720. In some embodiments, the transmission management module may transmit, on a per-frame basis, frame definition packets, followed by media packets.

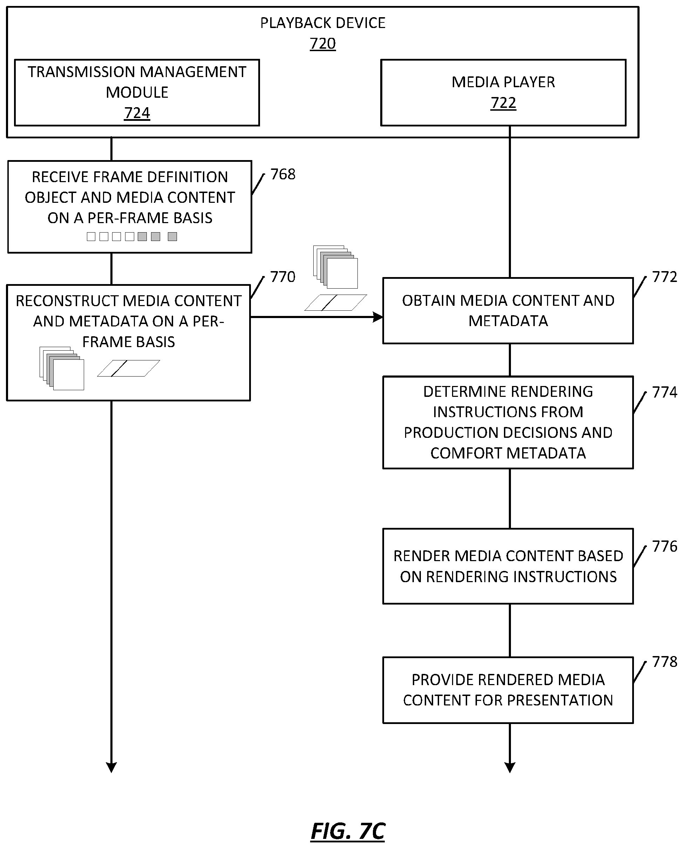

Turning to FIG. 7C, a continuation of the flow diagram of FIG. 7B is presented. The flow diagram of FIG. 7C includes the playback device 720. The playback device 720 may be an electronic device having one or more display device or other output devices which is configured to present media content. In some embodiments, the playback device may be configured to present immersive media, such as a head mounted device, wearable device, or the like.

The flow diagram of FIG. 7C begins at block 768, where the transmission management module 724 receives the packets for the frame definition object and media content on a per-frame basis. The transmission management module 724 may receive the packets associated with the frame definition object first, which may inform how to allocate media buffers for the frame, thereby allowing flexibility for frames of varying sizes and contents.

The flow diagram proceeds to 770, where the transmission management module 724 reconstructs the media content and metadata from the received media objects and/or frame definition object. Once the frame is reconstructed, the transmission management module 724 may provide the reconstructed frame to the media player 722.

At block 772, the media player 722 obtains media content and metadata from the transmission management module. At block 774, the media player 722 determines rendering instructions from the production decisions and the comfort metadata. The production decisions and comfort metadata may be incorporated into the metadata upstream by different devices in the network, such as the production device 700 and the comfort device 710. At block 776, the media player 722 may render the media content using the rendering instructions from the frame definition object. The flow diagram concludes at block 778 and the rendered media content is provided for presentation.

As shown above, the transport protocol allows different distribution networks to encode different instructions into the media stream, causing the media to be presented differently to their viewers. Further, the protocol allows the metadata to be incorporated into the streams by the transmission management module, thereby allowing different types of applications to make changes, additions, or the like, which can be passed through the pipeline.

### IMTP For File Transfer

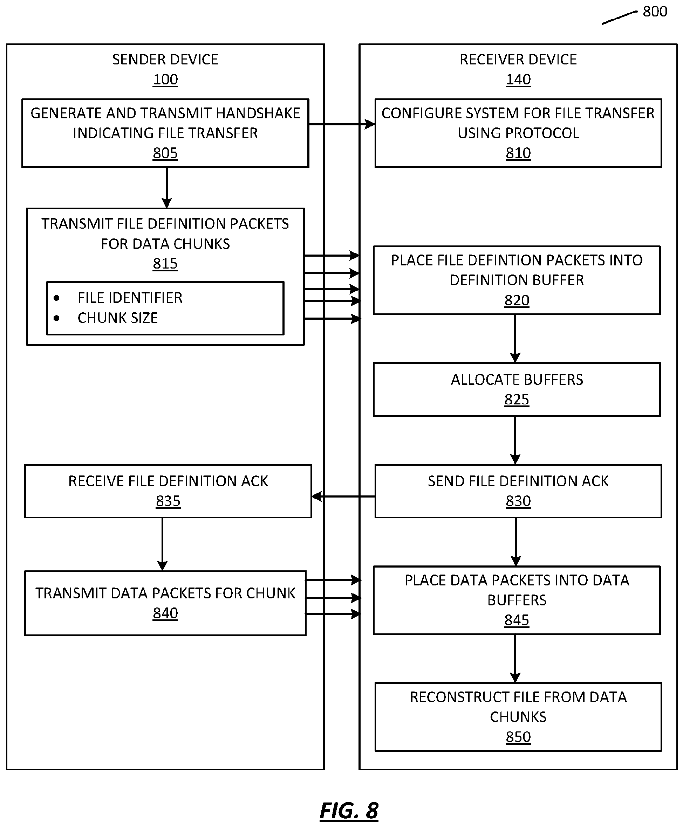

In some embodiments, the IMTP protocol may support multiple types of application data. FIG. 8 illustrates an example overview for using the disclosed protocol for file transfer, in accordance with one or more embodiments. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flowchart 800 begins at 805, where the sender device 100 generates and transmits a handshake message indicating a file transfer. According to one or more embodiments, a handshake message may be a control message exchanged over the TCP channel at connection establishment that contains a protocol code indicating that the transmission uses the IMTP protocol, an application code indicating the transfer type (e.g., frame-based media or file transfer), and the like. In some embodiments both sender and receiver device exchange matching handshake messages (protocol code, version, and application code must agree) for the connection to proceed. Thus, at block 810, the receiver device 140 receives the handshake message and provides its own handshake message indicating agreement. The receiver device 140 may additionally configure the transmission pipeline for the particular type of transfer. As an example, in a file transfer, the receiver device may disable unused features such as a frame reordering buffer or the like. Further, the handshake message may be sent per session, which allows for transmission sessions of two different types to occur between a sender and receiver at different times.

At block 815, the sender device creates and transmits a file definition object in the form of file definition packets for upcoming data chunks of the file. The file definition object describes the structure and content of the forthcoming data frames. This may include, for example, a file identifier, a file and/or data chunk size, or the like. The file definition object may be organized in a set of file definition packets, which are transmitted to the receiver device 140.

At block 820, the receiver device 140 receives the file definition packets from the sender device 100. The receiver device 140 may place the received file definition packets into definition buffer(s). The receiver device 140 may detect, from the file definition packets, attributes about the forthcoming data packets, and allocate data buffer(s) for the forthcoming data packets accordingly, as shown at 825. The data buffers may be allocated based on the information contained in the file definition object, such as the file identifier, data chunk size, and the like. After the file definition packets are transmitted, the receiver device transmits a file definition ACK, indicating that the file definition has been received, as shown at block 830.

The flowchart proceeds to block 835, where the sender device receives the file definition ACK. Once the file definition ACK is received, the sender device 100 transmits the data packets for a data chunk, as shown at 840. The transmission may be performed in any order, as the packets may arrive out of order. As the data packets arrive out of order, the receiver device 140 places the packets into data buffers at 845. After the receiver device 140 receives the data packets, the flowchart 800 concludes at block 850, where the receiver device 140 reconstructs the file from the data chunks. The reconstruction operation yields a file that can be stored locally, used by a local instance of the application on the receiver device 140, or the like.

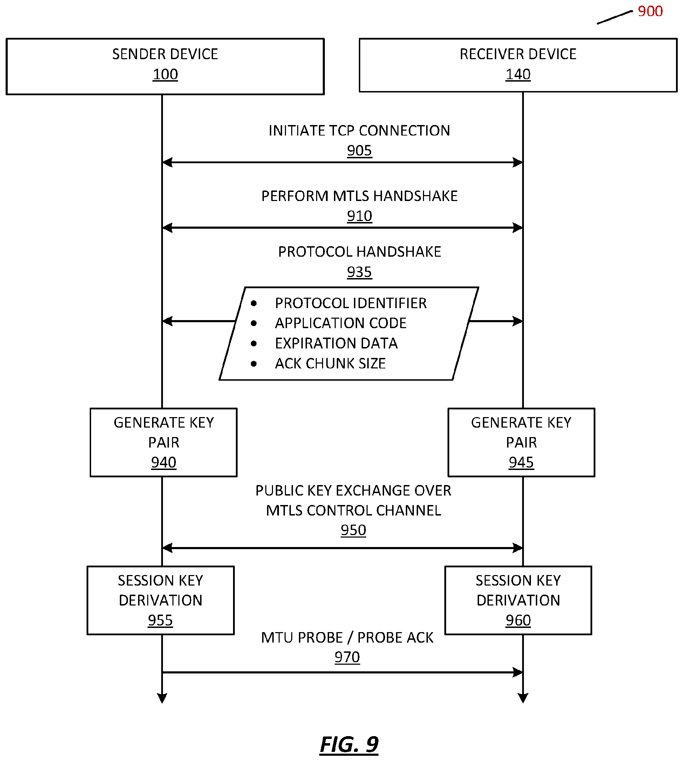

As described above, the protocol may handle different types of data for transmission, and may indicate a data or transmission type during a handshake process. FIG. 9 depicts a flow diagram of an example handshake process for an immersive media transport protocol, in accordance with one or more embodiments.

The flow diagram 900 begins with initiation of a TCP connection at 905 between the sender device 100 and the receiver device 140. In some embodiments, initiating the TCP connection may include a three-way handshake between the sender device 100 and the receiver device 140 in order to establish a control channel for the protocol. The flow diagram 900 proceeds to 910, where a mutual TLS ("mTLS") handshake is performed to encrypt the control channel.

At 935, a protocol handshake is performed over the encrypted TCP channel. In some embodiments, the protocol handshake may be used to share protocol characteristics between the sender device 100 and the receiver device 140 for an upcoming transmission. In some embodiments, the protocol handshake may include a protocol code indicating that the IMTP protocol will be used, an application code indicating a type of application data, such as frame-based real-time media, or file transfer, and the like. Other information in the handshake message may include a version number for the protocol, expiration data for the upcoming transmission, chunk and/or frame size, ACK chunk size, and the like.

The flow diagram 900 proceeds to blocks 940 and 945, where the sender device 100 and the receiver device 140 each generate a key pair. In some embodiments, each device independently generates a public-private key pair. Further, the key pair may be used for the particular session, and may not be used for further transfers. The public keys of each of the key pairs are then exchanged over the mTLS control channel, as shown at 950.

The flow diagram 900 proceeds to blocks 955 and 960, where each device derives a session key. In some embodiments, the session key may be derived based on the public key and a shared secret using its own private key and the other public key. Finally, the flow diagram 900 includes path MTU discovery at 970, where packet size for the transmission is determined. In some embodiments, the MTU probe and probe acknowledgment are used to determine a largest packet size that can be transmitted without fragmentation. The sender device 100 can then begin transmitting encrypted media or file data to the receiver device 140.

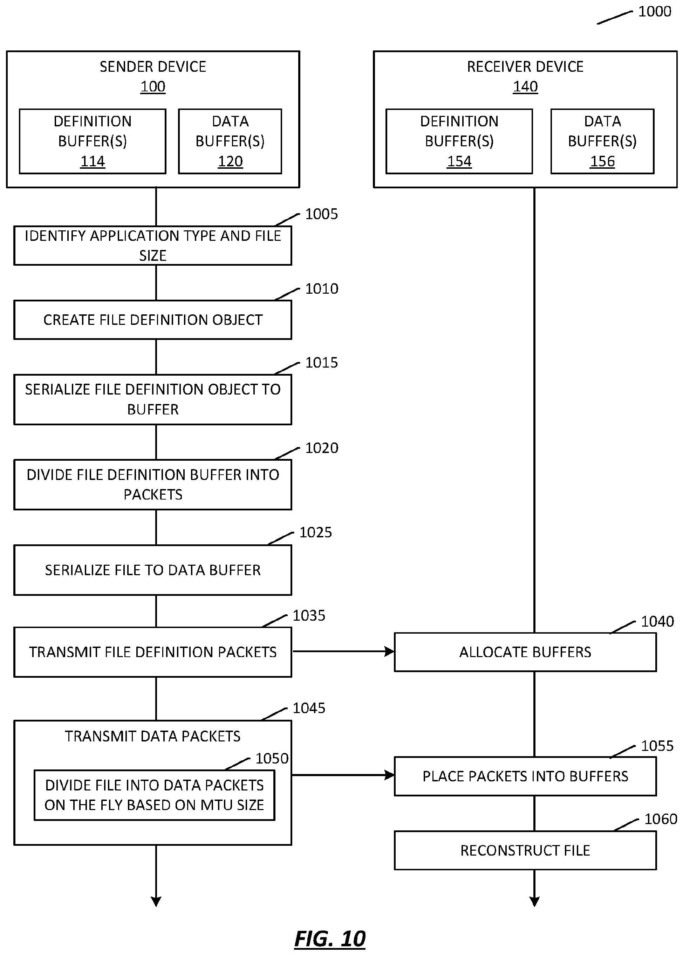

FIG. 10 depicts a flow diagram of a technique for file transmission using the immersive media transport protocol, in accordance with one or more embodiments. In particular, flow diagram 1000 shows an example technique for using the IMTP protocol for file transfer, in accordance with one or more embodiments. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flow diagram 1000 begins with sender device 100 identifying an application type and file size for a file to be transmitted. In some embodiment, the application type may indicate whether the application data is frame-based data. The file for transfer may include application data from a media or non-media application, and may or may not include frame-based data.

The flow diagram 1000 proceeds to block 1010, where the sender device creates a file definition object for the file and/or a data chunk of the file. The sender device 100 may generate the file definition object to include information related to the media comprised in the frame. For example, the file definition object may be a structure that contains information about the file and/or chunk, such as a file identifier, a file size, a data chunk size, and the like.

The flow diagram 1000 proceeds to block 1015, where the sender device 100 serializes the file definition object to an object definition buffer. Thus, the object definition buffer may be configured to handle frame definition objects and file definition objects. In some embodiments, the frame definition object may be transformed into a format to be transmitted across a network, for example in a sequence of chunks of data.

At block 1020, the sender device 100 divides the definition buffer into packets to be transmitted across the network. The packets may be datagrams that contain portions of the file definition object in the definition object buffer. Each packet may include a header that indicates the packet type, such as a frame definition packet type, and other information, a packet payload size, a total frame definition packet count, a packet number, a resend marker, a file definition size, and the like. The packets may be generated to have a size that is equal to or smaller than the maximum transmission unit (MTU) of the network 190. According to some embodiments, the MTU may not be predefined or otherwise known to the sender device 100. Accordingly, an MTU discovery technique may be performed. For example, the sender device 100 may connect to an intended receiver device 140 and emit periodically larger datagrams to the receiver device 140 until a maximum size is determined to be exceeded. The maximum size may be determined to be exceeded, for example, based on whether an acknowledgement is failed to be received in response to sending a discovery packet, or if the sender device 100 receives a size error on the socket used for transmission of the discovery packet.

Similarly, at block 1025, where the sender device 100 serializes the data for the file into one or more data buffers 120. In some embodiments, the data for the file may be transformed into a format to be transmitted across a network, for example in a sequence of chunks of data.

The flow diagram 1000 proceeds to block 1035, where the sender device 100 transmits the file definition packets to the receiver device 140. The transmission may be performed over one or more UDP ports using the network interface 108 of the sender device 100. The UDP ports may be predetermined or negotiated between the sender device 100 and the receiver device 140, for example during a handshake process as described above with respect to FIG. 9. In some embodiments, the frame definition data may be encrypted and authenticated prior to transmission.

At block 1040, the receiver device 140 receives the file definition packets from the sender device 100. The receiver device 140 may receive the file definition packets over one or more UDP ports using the network interface 148 of the receiver device 140. According to some embodiments, the receiver device 140 may place the received frame definition packets into definition buffer(s) 154. The receiver device 140 may decrypt encrypted packets, and reconstruct the file definition object. The receiver device 140 allocates data buffer(s) 160 for the file based on the information in the reconstructed file definition object. The data buffers may be allocated based on the information contained in the frame definition object, such as a file identifier identifiers, the number of packets a size of the file, a size of data chunks, or the like.

After the frame definition packets are transmitted, the flow diagram 1000 proceeds to block 1045, and the sender device transmits the data packets. In some embodiments, the sender device 100 divides the data buffer into packets to be transmitted across the network on the fly, for example based on MTU size. Each packet may include a header that indicates the packet type, such as a type of file, and other information, such as a sequence number, a timestamp, a packet payload size, a total packet count for the file, a packet number, a resend marker, and the like.

At block 1055, the receiver device 140 places the media packets into the data buffers 120 in accordance with the allocation. The flow diagram 1000 concludes at block 1060 where the receiver reconstructs the file from the data packets. The reconstruction may be performed by combining the data chunks received as part of the file transfer. The decoded file may then be processed by the receiving device. For example, the receiver device 140 may use the file in an application, store the file, or the like.

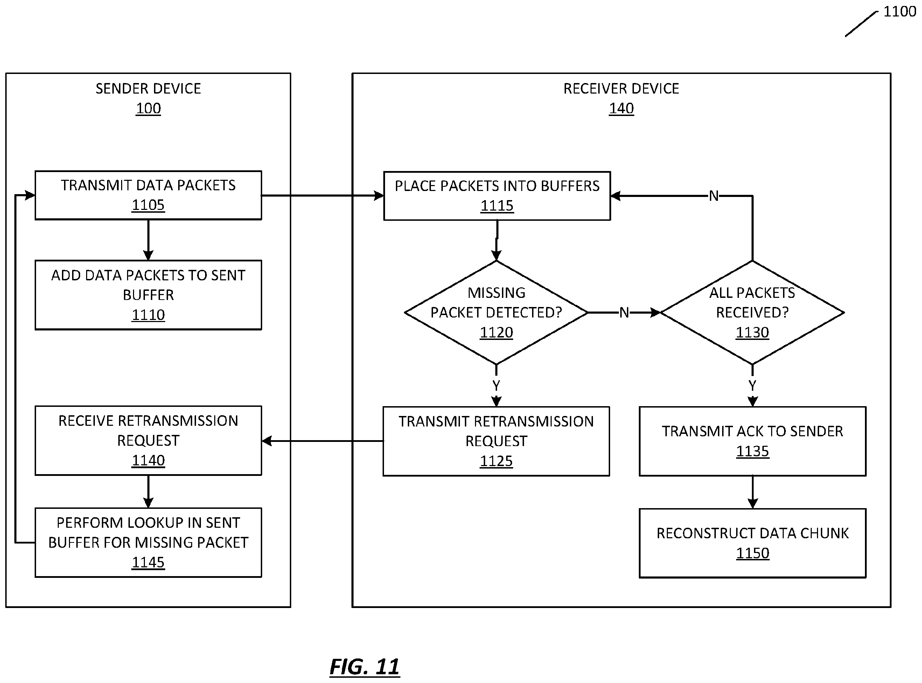

In some embodiments, packet expiration is not utilized when performing file transfer using the IMTP protocol. FIG. 11 depicts a flow diagram of an example process for handling missing packets during file transfer, in accordance with one or more embodiments. For purposes of explanation, the following processes will be described in the context of FIG. 1. As shown, process may be performed by the sender device 100 and the receiver device 140 of FIG. 1. However, the various actions may be taken by alternate components. In addition, the various actions may be performed in a different order. Further, some actions may be performed simultaneously, and some may not be required, or others may be added.

The flowchart 1100 begins at block 1105, where the sender device 100 transmits media packets for a media frame to the receiver device 140, as described above with respect to FIG. 8. As shown at block 1110, as the sender device 100 transmits packets, the sender device 100 adds the media packets to a sent packet buffer. The sent packet buffer may be a memory buffer that stores data packets that have been transmitted by the sender device 100.

Returning to block 1105, after the sender transmits the packets, the packets are received by the receiver device 140. At block 1115, the receiver device 140 places the data packets into data buffers. At block 1120, the receiver device 140 determines whether a missing packet is detected. The determination may be performed based on the sequence numbers in the headers of the received packets. If the receiver device 140 detects a gap in the sequence numbers, then the receiver device 140 may infer that a packet has been lost in transit. If no gap is detected (and, thus, no missing packets are detected), then the flowchart proceeds to block 1130, and the process continues until all packets are received for a frame. Specifically, a determination is made if all packets have been received. The determination may be made based on information encoded in the packet headers for the frame definition object or the media. For example, the headers may indicate a frame size, a media object size, a number of packets, or the like. If all packets have been received, then the flowchart proceeds to block 1135, where the receiver device 140 transmits an acknowledgment to the sender device 100 indicating that all packets have been received. The flowchart concludes at block 1150, and the data chunk is reconstructed from the received data packets for the data chunk.

Returning to block 1120, if a determination is made that a packet is missing, then the flowchart proceeds to block 1125. At block 1125, the receiver device 140 transmits a retransmission request to the sender device 100. The retransmission request may be a control message that indicates that a media packet is missing and needs to be retransmitted. The retransmission request may include the sequence number and the frame number of the missing packet.

The flowchart 1100 proceeds to block 1140, where the sender device 100 receives the retransmission request from the receiver device 140. In some embodiments, expiration data is not used for file transfer, because there may be fewer time constraints than when streaming a series of media frames. Thus, at block 1140, the sender device 100 performs a lookup operation for the missing packet in the sent media buffer. The lookup operation may be performed based on the sequence number and the frame number of the missing packet, which may be included in the retransmission request. The sender device 100 may retrieve the requested packet from the sent media buffer and the flowchart returns to block 1105 where the media packet is retransmitted. The flowchart 1100 proceeds until all missing packets are received by the receiver device 140, and the media frame is reconstructed, as shown at block 1135.

### Example Electronic Device

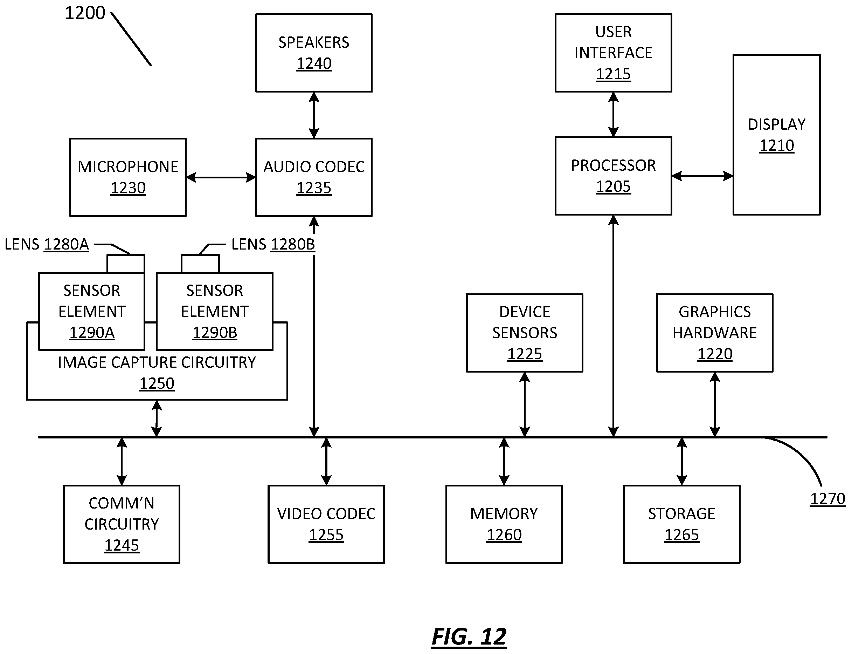

Referring now to FIG. 12, a simplified functional block diagram of illustrative multifunction device 1200 is shown according to one embodiment. Multifunctional device 1200 may show representative components, for example, sender device 100 and receiver device 140 of FIG. 1. Multifunction electronic device 1200 may include processor 1205, display 1210, user interface 1215, graphics hardware 1220, device sensors 1225 (*e.g.,* proximity sensor/ambient light sensor, accelerometer and/or gyroscope), microphone 1230, audio codec(s) 1235, speaker(s) 1240, communications circuitry 1245, digital image capture circuitry 1250 (e.g., including camera system) video codec(s) 1255 (e.g., in support of digital image capture unit), memory 1260, storage device 1265, and communications bus 1270. Multifunction electronic device 1200 may be, for example, a digital camera or a personal electronic device such as a personal digital assistant (PDA), personal music player, mobile telephone, wearable device, or a tablet computer.

Processor 1205 may execute instructions necessary to carry out or control the operation of many functions performed by device 1200 (e.g., such as the generation and/or processing of images or video as disclosed herein). Processor 1205 may, for instance, drive display 1210 and receive user input from user interface 1215. User interface 1215 may allow a user to interact with device 1200. For example, user interface 1215 can take a variety of forms, such as a button, keypad, dial, a click wheel, keyboard, display screen and/or a touch screen. Processor 1205 may also, for example, be a system-on-chip such as those found in mobile devices and include a dedicated graphics processing unit (GPU). Processor 1205 may be based on reduced instruction-set computer (RISC) or complex instruction-set computer (CISC) architectures or any other suitable architecture and may include one or more processing cores. Graphics hardware 1220 may be special purpose computational hardware for processing graphics and/or assisting processor 1205 to process graphics information. In one embodiment, graphics hardware 1220 may include a programmable GPU.

Image capture circuitry 1250 may include two (or more) lens assemblies 1280A and 1280B, where each lens assembly may have a separate focal length. For example, lens assembly 1280A may have a short focal length relative to the focal length of lens assembly 1280B. Each lens assembly may have a separate associated sensor element 1290A and 1290B. Alternatively, two or more lens assemblies may share a common sensor element. Image capture circuitry 1250 may capture still and/or video images. Output from image capture circuitry 1250 may be processed, at least in part, by video codec(s) 1255 and/or processor 1205 and/or graphics hardware 1220, and/or a dedicated image processing unit or pipeline incorporated within circuitry 1250. Images so captured may be stored in memory 1260 and/or storage 1265.

Sensor and camera circuitry 1250 may capture still and video images that may be processed in accordance with this disclosure, at least in part, by video codec(s) 1255 and/or processor 1205 and/or graphics hardware 1220, and/or a dedicated image processing unit incorporated within circuitry 1250. Images so captured may be stored in memory 1260 and/or storage 1265. Memory 1260 may include one or more different types of transitory and/or non-transitory storage hosting computer code and/or data used by processor 1205 and graphics hardware 1220 to perform device functions. For example, memory 1260 may include memory cache, read-only memory (ROM), and/or random-access memory (RAM). Storage 1265 may store media (e.g., audio, image, and video files), computer program instructions or software, preference information, device profile information, and any other suitable data. Storage 1265 may include one more non-transitory computer-readable storage media including but not limited to magnetic disks (fixed, floppy, and removable) and tape, optical media such as CD-ROMs and digital video disks (DVDs), and semiconductor memory devices such as Electrically Programmable Read-Only Memory (EPROM), Electrically Erasable Programmable Read-Only Memory (EEPROM), or the like. Memory 1260 and storage 1265 may be used to tangibly retain computer program instructions or computer readable code organized into one or more modules and written in any desired computer programming language. When executed by, for example, processor 1205, such computer program code may implement one or more of the methods described herein.

In a first example, embodiments described herein are directed to a method including receiving, for a media frame comprising a plurality of media types, a frame definition object comprising a frame identifier and a plurality of media type identifiers; allocating a plurality of media buffers for the media frame; in response to receiving media packets corresponding to the media frame, placing media packets into the plurality of media buffers in accordance with the allocation; and in response to a determination that all of the plurality of media packets are received, reconstructing the frame object comprising the plurality of media types from the media packets.

In some embodiments, each packet is associated with a sequence number, and the packets are received out of order.

In some embodiments, the method further includes detecting a gap in the sequence numbers, and scheduling a retransmission request to a sender device based on the gap.

In some embodiments, the retransmission request comprises the sequence number and a frame number of a missing packet.

In some embodiments, the retransmission request is scheduled to repeat indefinitely if the missing packet belongs to a key frame or a frame definition packet.

In some embodiments, the method further includes, in response to receiving a first media packet for a frame prior to a frame definition packet for the frame, placing the first media packet in a homeless packet buffer; and in response to receiving the frame definition packet for the frame, moving the first media packet to one of the plurality of media buffers.

In some embodiments, the method further includes, in response to receiving a first media packet for a frame prior to a frame definition packet for the frame, discarding the first packet in response to an expiration of a predetermined time.

In some embodiments, the method further includes determining a roundtrip time between a receiver device and a sender device; determining an interframe interval for the received packets; and in response to the interframe interval and the roundtrip time satisfying a resizing criterion, resizing a frame reorder buffer.

In a second example, a method includes obtaining a first frame of a media stream, wherein the first frame comprises a media object and a first version of a frame definition object for the media object, wherein the first version of the frame definition object comprises media content attributes; providing the media object to an application as part of the media stream; and in response to receiving, from the application, production instructions for the media stream: encoding a second version of the frame definition object to include the production instructions, and transmitting a modified first frame of the media stream, comprising the second version of the frame definition object and the media object.

In some embodiments, obtaining the first frame of the media stream includes receiving a first plurality of frame definition packets for the first frame; reconstructing the frame definition object from the frame definition packet; receiving a first plurality of media packets for the first frame; and reconstructing the media object from the plurality of media packets.

In some embodiments, the method also includes determining, from the frame definition object, attributes of the media object; and allocating a first plurality of media buffers based on the attributes of the media object, wherein the received first plurality of media packets are placed in the first plurality of media buffers in accordance with the allocation.

In some embodiments, the media stream comprises a second frame, and the method further includes receiving a second frame definition object for the second frame; determining a size of a second media object for the second frame based on the second frame definition object; and allocating a second plurality of media buffers for the second media object, wherein the second plurality of media buffers are of a different size than the first plurality of media buffers in accordance with a size of the media object of the first frame being different than a size of the media object of the second frame.

In some embodiments, the method further includes transmitting the modified first frame over a plurality of sender threads.

In some embodiments, the method further includes transmitting the modified first frame as one or more series of packets; and in response to transmitting each packet of the one or more series of packets, inserting each packet into a sent media buffer.

In some embodiments, frame definition object further encodes rendering instructions for the media stream.

According to one or more embodiments, the various example methods described above may be deployed as computer readable code executable by one or more processors. The computer readable code may be encoded in a non-transitory storage device.

The scope of the disclosed subject matter should be determined with reference to the appended claims, along with the full scope of equivalents to which such claims are entitled. In the appended claims, the terms "including" and "in which" are used as the plain-English equivalents of the respective terms "comprising" and "wherein."

Exemplary methods, non-transitory computer readable media, and systems are set out in the following items.

Item list 1:
1. A method comprising:
   creating, for a media frame comprising a plurality of media types, a frame definition object comprising a frame identifier and a plurality of media type identifiers;
   transmitting a plurality of frame packets corresponding to the frame definition object; and
   transmitting a plurality of media packets for the media frame comprising media data of the plurality of media types.
2. The method of item 1, further comprising:
   generating the plurality of media packets from the media frame, each of the plurality of media packets comprising a media packet header indicating a packet type and a sequence identifier.
3. The method of item 2, further comprising:
   In response to transmitting the plurality of media packets, inserting the plurality of media packets into a sent media buffer.
4. The method of item 3, further comprising:
   receiving, from a receiver device, a retransmission request comprising a media packet identifier;
   performing a lookup operation for the media packet identifier in the sent media buffer; and
   retransmitting a media packet comprising the media packet identifier to the receiver device.
5. The method of item 1, wherein the plurality of media packets are transmitted over a plurality of sender threads.
6. The method of item 5, further comprising:
   determining a growth rate of a sender queue;
   determining an inter-packet interval metric;
   in response to the growth rate and the inter-packet interval metric satisfying a bottleneck criterion:
      instructing a receiver device to spawn an additional receiver thread;
      spawning an additional sender thread; and
      distributing the plurality of media packets over the plurality of sender threads and the additional sender thread.
7. The method of item 1, wherein each media packet comprises a frame index, a packet index, and a media index corresponding to the frame to which it belongs.
8. The method of item 1, wherein the plurality of media packets are transmitted out of order.
9. A non-transitory computer readable medium comprising computer readable code executable by one or more processors to:
   create, for a media frame comprising a plurality of media types, a frame definition object comprising a frame identifier and a plurality of media type identifiers;
   transmit a plurality of frame packets corresponding to the frame definition object; and
   transmit a plurality of media packets for the media frame comprising media data of the plurality of media types.
10. The non-transitory computer readable medium of item 9, further comprising computer readable code to:
   generate the plurality of media packets from the media frame, each of the plurality of media packets comprising a media packet header indicating a packet type and a sequence identifier.
11. The non-transitory computer readable medium of item 10, further comprising computer readable code to:
   in response to transmitting the plurality of media packets, insert the plurality of media packets into a sent media buffer.
12. The non-transitory computer readable medium of item 11, further comprising computer readable code to:
   receive, from a receiver device, a retransmission request comprising a media packet identifier;
   perform a lookup operation for the media packet identifier in the sent media buffer; and
   retransmit a media packet comprising the media packet identifier to the receiver device.
13. The non-transitory computer readable medium of item 9, wherein the plurality of media packets are transmitted over a plurality of sender threads.
14. The non-transitory computer readable medium of item 13, further comprising computer readable code to:
   determine a growth rate of a sender queue;
   determine an inter-packet interval metric;
   in response to the growth rate and the inter-packet interval metric satisfying a bottleneck criterion:
      instruct a receiver device to spawn an additional receiver thread;
      spawn an additional sender thread; and
         distribute the plurality of media packets over the plurality of sender threads and the additional sender thread.
15. The non-transitory computer readable medium of item 9, wherein each media packet comprises a frame index, a packet index, and a media index corresponding to the frame to which it belongs.
16. The non-transitory computer readable medium of item 9, wherein the plurality of media packets are transmitted out of order.
17. A system comprising:
   one or more processors; and
   one or more computer readable media comprising computer readable code executable by the one or more processors to:
      create, for a media frame comprising a plurality of media types, a frame definition object comprising a frame identifier and a plurality of media type identifiers;
      transmit a plurality of frame packets corresponding to the frame definition object; and
      transmit a plurality of media packets for the media frame comprising media data of the plurality of media types.
18. The system of item 17, further comprising computer readable code to:
   generate the plurality of media packets from the media frame, each of the plurality of media packets comprising a media packet header indicating a packet type and a sequence identifier.
19. The system of item 18, further comprising computer readable code to:
   in response to transmitting the plurality of media packets, insert the plurality of media packets into a sent media buffer.
20. The system of item 19, further comprising computer readable code to:
   receive, from a receiver device, a retransmission request comprising a media packet identifier;
   perform a lookup operation for the media packet identifier in the sent media buffer; and
   retransmit a media packet comprising the media packet identifier to the receiver device.
21. The system of item 17, wherein the plurality of media packets are transmitted over a plurality of sender threads.
22. The system of item 21, further comprising computer readable code to:
   determine a growth rate of a sender queue;
   determine an inter-packet interval metric;
   in response to the growth rate and the inter-packet interval metric satisfying a bottleneck criterion:
      instruct a receiver device to spawn an additional receiver thread;
      spawn an additional sender thread; and
         distribute the plurality of media packets over the plurality of sender threads and the additional sender thread.
23. The system of item 17, wherein each media packet comprises a frame index, a packet index, and a media index corresponding to the frame to which it belongs.
24. The system of item 17, wherein the plurality of media packets are transmitted out of order.
25. A method comprising:
   receiving, for a media frame comprising a plurality of media types, a frame definition object comprising a frame identifier and a plurality of media type identifiers;
   allocating a plurality of media buffers for the media frame; and
   in response to receiving media packets corresponding to the media frame, placing media packets into the plurality of media buffers in accordance with the allocation; and
   in response to a determination that all of the plurality of media packets are received, reconstructing the frame object comprising the plurality of media types from the media packets.
26. The method of item 25, wherein each packet has a sequence number, and the packets are received out of order.
27. The method of item 26, further comprising:
   detecting a gap in the sequence numbers, and
   scheduling a retransmission request to a sender device based on the gap.
28. The method of item 27, wherein the retransmission request comprises the sequence number and a frame number of a missing packet.
29. The method of item 28, wherein the retransmission request is scheduled to repeat indefinitely if the missing packet belongs to a key frame or a frame definition packet.
30. The method of item 25, further comprising:
   in response to receiving a first media packet for a frame prior to a frame definition packet for the frame, placing the first media packet in a homeless packet buffer; and
   in response to receiving the frame definition packet for the frame, moving the first media packet to one of the plurality of media buffers.
31. The method of item 25, further comprising:
   in response to receiving a first media packet for a frame prior to a frame definition packet for the frame, discarding the first packet in response to an expiration of a predetermined time.
32. The method of item 25, further comprising:
   determining a roundtrip time between a receiver device and a sender device;
   determining an interframe interval for the received packets; and
   in response to the interframe interval and the roundtrip time satisfying a resizing criterion, resizing a frame reorder buffer.
33. A non-transitory computer readable medium comprising computer readable code executable by one or more processors to:
   receive, for a media frame comprising a plurality of media types, a frame definition object comprising a frame identifier and a plurality of media type identifiers;
   allocate a plurality of media buffers for the media frame; and
   in response to receiving media packets corresponding to the media frame, place media packets into the plurality of media buffers in accordance with the allocation; and
   in response to a determination that all of the plurality of media packets are received, reconstruct the frame object comprising the plurality of media types from the media packets.
34. The non-transitory computer readable medium of item 33, wherein each packet has a sequence number, and the packets are received out of order.
35. The non-transitory computer readable medium of item 34, further comprising computer readable code to:
   detect a gap in the sequence numbers, and
   schedule a retransmission request to a sender device based on the gap.
36. The non-transitory computer readable medium of item 35, wherein the retransmission request comprises the sequence number and a frame number of a missing packet.
37. The non-transitory computer readable medium of item 36, wherein the retransmission request is scheduled to repeat indefinitely if the missing packet belongs to a key frame or a frame definition packet.
38. The non-transitory computer readable medium of item 33, further comprising computer readable code to:
   in response to receiving a first media packet for a frame prior to a frame definition packet for the frame, place the first media packet in a homeless packet buffer; and
   in response to receiving the frame definition packet for the frame, move the first media packet to one of the plurality of media buffers.
39. The non-transitory computer readable medium of item 33, further comprising computer readable code to:
   in response to receiving a first media packet for a frame prior to a frame definition packet for the frame, discard the first packet in response to an expiration of a predetermined time.
40. The non-transitory computer readable medium of item 33, further comprising computer readable code to:
   determine a roundtrip time between a receiver device and a sender device;
   determine an interframe interval for the received packets; and
   in response to the interframe interval and the roundtrip time satisfying a resizing criterion, resize a frame reorder buffer.
41. A system comprising:
   one or more processors; and
   one or more computer readable media comprising computer readable code executable by the one or more processors to:
      receive, for a media frame comprising a plurality of media types, a frame definition object comprising a frame identifier and a plurality of media type identifiers;
      allocate a plurality of media buffers for the media frame; and
      in response to receiving media packets corresponding to the media frame, place media packets into the plurality of media buffers in accordance with the allocation; and
      in response to a determination that all of the plurality of media packets are received, reconstruct the frame object comprising the plurality of media types from the media packets.
42. The system of item 41, wherein each packet has a sequence number, and the packets are received out of order.
43. The system of item 42, further comprising computer readable code to:
   detect a gap in the sequence numbers, and
   schedule a retransmission request to a sender device based on the gap.
44. The system of item 43, wherein the retransmission request comprises the sequence number and a frame number of a missing packet.
45. The system of item 44, wherein the retransmission request is scheduled to repeat indefinitely if the missing packet belongs to a key frame or a frame definition packet.
46. The system of item 41, further comprising computer readable code to:
   in response to receiving a first media packet for a frame prior to a frame definition packet for the frame, place the first media packet in a homeless packet buffer; and
   in response to receiving the frame definition packet for the frame, move the first media packet to one of the plurality of media buffers.
47. The system of item 41, further comprising computer readable code to:
   in response to receiving a first media packet for a frame prior to a frame definition packet for the frame, discard the first packet in response to an expiration of a predetermined time.
48. The system of item 41, further comprising computer readable code to:
   determine a roundtrip time between a receiver device and a sender device;
   determine an interframe interval for the received packets; and
   in response to the interframe interval and the roundtrip time satisfying a resizing criterion, resize a frame reorder buffer.
49. A non-transitory computer readable medium comprising computer readable code executable by one or more processors to:
   obtain a first frame of a media stream, wherein the first frame comprises a media object and a first version of a frame definition object for the media object, wherein the first version of the frame definition object comprises media content attributes;
   provide the media object to an application as part of the media stream; and
   in response to receiving, from the application, production instructions for the media stream:
      encoding a second version of the frame definition object to include the production instructions; and
      transmitting a modified first frame of the media stream, comprising the second version of the frame definition object and the media object.
50. The non-transitory computer readable medium of item 49, wherein the computer readable code to obtain the first frame of the media stream comprises computer readable code to:
   receive a first plurality of frame definition packets for the first frame;
   reconstruct the frame definition object from the frame definition packet;
   receive a first plurality of media packets for the first frame; and
   reconstruct the media object from the plurality of media packets.
51. The non-transitory computer readable medium of item 50, further comprising computer readable code to:
   determine, from the frame definition object, attributes of the media object; and
   allocate a first plurality of media buffers based on the attributes of the media object,
   wherein the received first plurality of media packets are placed in the first plurality of media buffers in accordance with the allocation.
52. The non-transitory computer readable medium of item 51, wherein the media stream comprises a second frame, and further comprising computer readable code to:
   receive a second frame definition object for the second frame;
   determine a size of a second media object for the second frame based on the second frame definition object; and
   allocate a second plurality of media buffers for the second media object, wherein the second plurality of media buffers are of a different size than the first plurality of media buffers in accordance with a size of the media object of the first frame being different than a size of the media object of the second frame.
53. The non-transitory computer readable medium of item 49, further comprising computer readable code to:
   transmit the modified first frame over a plurality of sender threads.
54. The non-transitory computer readable medium of item 53, further comprising computer readable code to:
   transmit the modified first frame as one or more series of packets; and
   in response to transmitting each packet of the one or more series of packets, insert each packet into a sent media buffer.
55. The non-transitory computer readable medium of item 49, wherein frame definition object further encodes rendering instructions for the media stream.
56. A method comprising:
   obtaining a first frame of a media stream, wherein the first frame comprises a media object and a first version of a frame definition object for the media object, wherein the first version of the frame definition object comprises media content attributes;
   providing the media object to an application as part of the media stream; and
   in response to receiving, from the application, production instructions for the media stream:
      encoding a second version of the frame definition object to include the production instructions, and
      transmitting a modified first frame of the media stream, comprising the second version of the frame definition object and the media object.
57. The method of item 56, wherein obtaining the first frame of the media stream comprises:
   receiving a first plurality of frame definition packets for the first frame;
   reconstructing the frame definition object from the frame definition packet;
   receiving a first plurality of media packets for the first frame; and
   reconstructing the media object from the plurality of media packets.
58. The method of item 57, further comprising:
   determining, from the frame definition object, attributes of the media object; and
   allocating a first plurality of media buffers based on the attributes of the media object,
   wherein the received first plurality of media packets are placed in the first plurality of media buffers in accordance with the allocation.
59. The method of item 58, wherein the media stream comprises a second frame, and further comprising:
   receiving a second frame definition object for the second frame;
   determining a size of a second media object for the second frame based on the second frame definition object; and
   allocating a second plurality of media buffers for the second media object, wherein the second plurality of media buffers are of a different size than the first plurality of media buffers in accordance with a size of the media object of the first frame being different than a size of the media object of the second frame.
60. The method of item 56, further comprising:
   transmitting the modified first frame over a plurality of sender threads.
61. The method of item 60, further comprising:
   transmitting the modified first frame as one or more series of packets; and
   in response to transmitting each packet of the one or more series of packets, inserting each packet into a sent media buffer.
62. The method of item 56, wherein frame definition object further encodes rendering instructions for the media stream.
63. A system comprising:
   one or more processors; and
   one or more computer readable media comprising computer readable code executable by the one or more processors to:
      obtain a first frame of a media stream, wherein the first frame comprises a media object and a first version of a frame definition object for the media object, wherein the first version of the frame definition object comprises media content attributes;
      provide the media object to an application as part of the media stream; and
      in response to receiving, from the application, production instructions for the media stream:
         encoding a second version of the frame definition object to include the production instructions; and
         transmitting a modified first frame of the media stream, comprising the second version of the frame definition object and the media object.
64. The system of item 63, wherein the computer readable code to obtain the first frame of the media stream comprises computer readable code to:
   receive a first plurality of frame definition packets for the first frame;
   reconstruct the frame definition object from the frame definition packet;
   receive a first plurality of media packets for the first frame; and
   reconstruct the media object from the plurality of media packets.
65. The system of item 64, further comprising computer readable code to:
   determine, from the frame definition object, attributes of the media object; and
   allocate a first plurality of media buffers based on the attributes of the media object,
   wherein the received first plurality of media packets are placed in the first plurality of media buffers in accordance with the allocation.
66. The system of item 65, wherein the media stream comprises a second frame, and further comprising computer readable code to:
   receive a second frame definition object for the second frame;
   determine a size of a second media object for the second frame based on the second frame definition object; and
   allocate a second plurality of media buffers for the second media object, wherein the second plurality of media buffers are of a different size than the first plurality of media buffers in accordance with a size of the media object of the first frame being different than a size of the media object of the second frame.
67. The system of item 63, further comprising computer readable code to:
   transmit the modified first frame over a plurality of sender threads.
68. The system of item 67, further comprising computer readable code to:
   transmit the modified first frame as one or more series of packets; and
   in response to transmitting each packet of the one or more series of packets, insert each packet into a sent media buffer.
69. The system of item 63, wherein frame definition object further encodes rendering instructions for the media stream.

item list 2:
1. A method comprising:
   creating, at a protocol layer, a frame definition object for a media transmission, wherein the frame definition object is created to satisfy a predefined protocol structure, and wherein the frame definition object comprises a frame identifier and a plurality of media type identifiers for a media frame comprising a plurality of media types;
   transmitting a plurality of frame packets corresponding to the frame definition object; and
   transmitting a plurality of media packets for the media frame comprising media data of the plurality of media types.
2. The method of item 1, further comprising:
   generating the plurality of media packets from the media frame, each of the plurality of media packets comprising a media packet header indicating a packet type and a sequence identifier.
3. The method of item 2, further comprising:
   in response to transmitting the plurality of media packets, inserting the plurality of media packets into a sent media buffer.
4. The method of item 3, further comprising:
   receiving, from a receiver device, a retransmission request comprising a media packet identifier;
   performing a lookup operation for the media packet identifier in the sent media buffer; and
   retransmitting a media packet comprising the media packet identifier to the receiver device.
5. The method of item 1, wherein the plurality of media packets are transmitted over a plurality of sender threads.
6. The method of item 5, further comprising:
   determining a growth rate of a sender queue;
   determining an inter-packet interval metric;
   in response to the growth rate and the inter-packet interval metric satisfying a bottleneck criterion:
      instructing a receiver device to spawn an additional receiver thread;
      spawning an additional sender thread; and
      distributing the plurality of media packets over the plurality of sender threads and the additional sender thread.
7. The method of item 1, wherein each media packet comprises a frame index, a packet index, and a media index corresponding to the media frame to which it belongs.
8. The method of item 1, further comprising:
   creating, at the protocol layer, a file definition object for a file to be transferred to a receiver device, wherein the file definition object satisfies the predefined protocol structure, and wherein the file definition object comprises a file identifier and a file size;
   generating a plurality of data chunks from the file;
   transmitting a plurality of definition packets corresponding to the file definition object; and
   transmitting a plurality of data packets for the file comprising in accordance with the data chunks.
9. A non-transitory computer readable medium comprising computer readable code executable by one or more processors to:
   create, at a protocol layer, a frame definition object for a media transmission, wherein the frame definition object is created to satisfy a predefined protocol structure, and wherein the frame definition object comprises a frame identifier and a plurality of media type identifiers for a media frame comprising a plurality of media types;
   cause a plurality of frame packets corresponding to the frame definition object to be transmitted to a receiver device; and
   cause a plurality of media packets for the media frame comprising media data of the plurality of media types to be transmitted to the receiver device.
10. The non-transitory computer readable medium of item 9, further comprising computer readable code to:
   generate the plurality of media packets from the media frame, each of the plurality of media packets comprising a media packet header indicating a packet type and a sequence identifier.
11. The non-transitory computer readable medium of item 9, further comprising:
   in response to transmitting the plurality of media packets, inserting the plurality of media packets into a sent media buffer.
12. The non-transitory computer readable medium of item 11, further comprising:
   receiving, from a receiver device, a retransmission request comprising a media packet identifier;
   performing a lookup operation for the media packet identifier in the sent media buffer; and
   causing a media packet comprising the media packet identifier to be retransmitted to the receiver device.
13. The non-transitory computer readable medium of item 12, wherein transmission of the media packet is prioritized over transmission of additional packets.
14. The non-transitory computer readable medium of item 13, wherein the lookup operation is performed in response to a determination that the media packet associated with the media packet identifier fails to satisfy an expiration policy.
15. The non-transitory computer readable medium of item 9, further comprising computer readable code to:
   create, at the protocol layer, a file definition object for a file to be transferred to a receiver device, wherein the file definition object satisfies the predefined protocol structure, and wherein the file definition object comprising a file identifier and a file size;
   generate a plurality of data chunks from the file;
   cause a plurality of definition packets corresponding to the file definition object to be transmitted to a receiver device; and
   cause a plurality of data packets for the file to be transmitted to the receiver device.
16. A system comprising:
   one or more processors; and
   one or more computer readable media comprising computer readable code executable by the one or more processors to:
      create, at a protocol layer, a frame definition object for a media transmission, wherein the frame definition object is created to satisfy a predefined protocol structure, and wherein the frame definition object comprises a frame identifier and a plurality of media type identifiers for a media frame comprising a plurality of media types;
      cause a plurality of frame definition packets corresponding to the frame definition object to be transmitted to a receiver device; and
      cause a plurality of media packets for the media frame comprising media data of the plurality of media types to be transmitted to the receiver device.
17. The system of item 16, further comprising computer readable code to:
   create, at the protocol layer, a file definition object for a file to be transferred to a receiver device, wherein the file definition object satisfies the predefined protocol structure, and wherein the file definition object comprising a file identifier and a file size;
   generate a plurality of data chunks from the file;
   cause a plurality of definition packets corresponding to the file definition object to be transmitted to a receiver device; and
   cause a plurality of data packets for the file to be transmitted to the receiver device.
18. The system of item 16, further comprising computer readable code to:
   generate a handshake message comprising an application code, wherein the application code indicates a media transmission in accordance with the plurality of frame definition packets and the plurality of media packets.
19. The system of item 18, wherein the handshake message further comprises expiration data for the media transmission.
20. The system of item 16, wherein each media packet comprises a frame index, a packet index, and a media index corresponding to the media frame to which it belongs.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
creating, at a protocol layer, a frame definition object for a media transmission, wherein the frame definition object is created to satisfy a predefined protocol structure, and wherein the frame definition object comprises a frame identifier and a plurality of media type identifiers for a media frame comprising a plurality of media types;
transmitting a plurality of frame packets corresponding to the frame definition object; and
transmitting a plurality of media packets for the media frame comprising media data of the plurality of media types.

2. The method of claim 1, further comprising:
creating, at the protocol layer, a file definition object for a file to be transferred to a receiver device, wherein the file definition object satisfies the predefined protocol structure, and wherein the file definition object comprising a file identifier and a file size;
generating a plurality of data chunks from the file;
transmitting, to a receiver device, a plurality of definition packets corresponding to the file definition object; and
transmitting, to the receiver device, a plurality of data packets for the file.

3. The method of any of the preceding claims, further comprising:
generating a handshake message comprising an application code, wherein the application code indicates a media transmission in accordance with the plurality of frame definition packets and the plurality of media packets.

4. The method of claim 3, wherein the handshake message further comprises expiration data for the media transmission.

5. The method of any of the preceding claims, further comprising:
generating the plurality of media packets from the media frame, each of the plurality of media packets comprising a media packet header indicating a packet type and a sequence identifier.

6. The method of claim 5, further comprising:
in response to transmitting the plurality of media packets, inserting the plurality of media packets into a sent media buffer.

7. The method of claim 6, further comprising:
receiving, from a receiver device, a retransmission request comprising a media packet identifier;
performing a lookup operation for the media packet identifier in the sent media buffer; and
retransmitting a media packet comprising the media packet identifier to the receiver device.

8. The method of any of the preceding claims, wherein the plurality of media packets are transmitted over a plurality of sender threads.

9. The method of claim 8, further comprising:
determining a growth rate of a sender queue;
determining an inter-packet interval metric;
in response to the growth rate and the inter-packet interval metric satisfying a bottleneck criterion:
instructing a receiver device to spawn an additional receiver thread;
spawning an additional sender thread; and
distributing the plurality of media packets over the plurality of sender threads and the additional sender thread.

10. The method of any of the preceding claims, wherein each media packet comprises a frame index, a packet index, and a media index corresponding to the media frame to which it belongs.

11. A non-transitory computer readable medium comprising computer readable code executable by one or more processors to perform the method of any of claims 1-10.

12. A system comprising:
one or more processors; and
one or more computer readable media comprising computer readable code executable by the one or more processors to:
create, at a protocol layer, a frame definition object for a media transmission, wherein the frame definition object is created to satisfy a predefined protocol structure, and wherein the frame definition object comprises a frame identifier and a plurality of media type identifiers for a media frame comprising a plurality of media types;
cause a plurality of frame definition packets corresponding to the frame definition object to be transmitted to a receiver device; and
cause a plurality of media packets for the media frame comprising media data of the plurality of media types to be transmitted to the receiver device.

13. The system of claim 12, further comprising computer readable code to:
create, at the protocol layer, a file definition object for a file to be transferred to a receiver device, wherein the file definition object satisfies the predefined protocol structure, and wherein the file definition object comprising a file identifier and a file size;
generate a plurality of data chunks from the file;
cause a plurality of definition packets corresponding to the file definition object to be transmitted to a receiver device; and
cause a plurality of data packets for the file to be transmitted to the receiver device.

14. The system of any of claims 12-13, further comprising computer readable code to:
generate a handshake message comprising an application code, wherein the application code indicates a media transmission in accordance with the plurality of frame definition packets and the plurality of media packets.

15. The system of any of claims 12-14, further comprising computer readable code to:
generate the plurality of media packets from the media frame, each of the plurality of media packets comprising a media packet header indicating a packet type and a sequence identifier.
